(19) Europäisches Patentamt
European Patent Office
Office européen des brevets

(11) EP 4 310 951 A1

(12) **EUROPEAN PATENT APPLICATION**
published in accordance with Art. 153(4) EPC

(43) Date of publication:
**24.01.2024 Bulletin 2024/04**

(21) Application number: **22771129.8**

(22) Date of filing: **03.03.2022**

(51) International Patent Classification (IPC):
***H01M 4/505*** *(2010.01)* ***H01M 4/525*** *(2010.01)*
***H01M 10/052*** *(2010.01)* ***H01M 10/0567*** *(2010.01)*
***H01M 10/0568*** *(2010.01)*

(52) Cooperative Patent Classification (CPC):
**H01M 4/505; H01M 4/525; H01M 10/052; H01M 10/0567; H01M 10/0568;** Y02E 60/10; Y02P 70/50

(86) International application number:
**PCT/JP2022/009159**

(87) International publication number:
**WO 2022/196375 (22.09.2022 Gazette 2022/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.03.2021 JP 2021044153**

(71) Applicant: **Mitsui Chemicals, Inc.**
**Tokyo 104-0028 (JP)**

(72) Inventors:
- **SUGURO, Masahiro**
  **Sodegaura-shi, Chiba 299-0265 (JP)**
- **OJI, Yurika**
  **Sodegaura-shi, Chiba 299-0265 (JP)**
- **SHIMIZU, Yusuke**
  **Sodegaura-shi, Chiba 299-0265 (JP)**
- **KUBO, Teruhiko**
  **Sodegaura-shi, Chiba 299-0265 (JP)**
- **MIO, Shigeru**
  **Sodegaura-shi, Chiba 299-0265 (JP)**
- **NOGI, Hidenobu**
  **Sodegaura-shi, Chiba 299-0265 (JP)**

(74) Representative: **J A Kemp LLP**
**80 Turnmill Street**
**London EC1M 5QU (GB)**

(54) **NONAQUEOUS SECONDARY BATTERY AND METHOD FOR PRODUCING NONAQUEOUS SECONDARY BATTERY**

(57) Provided is a nonaqueous secondary battery including: a nonaqueous electrolyte solution that contains a compound (A) represented by the following Formula (I); a positive electrode that contains a positive electrode active material containing a compound (B) represented by the following Formula (II); and a negative electrode. The content of the compound (A) is more than 0% by mass but less than 1.0% by mass with respect to a total amount of the nonaqueous electrolyte solution. In Formula (I), $X^+$ represents a hydrogen ion, a lithium ion, a sodium ion, or a potassium ion. In Formula (II), $0.1 \leq a < 1.3$, $0.1 < (1 - b - c) < 1.0$, $0 < b < 0.6$, and $0 < c < 0.6$.

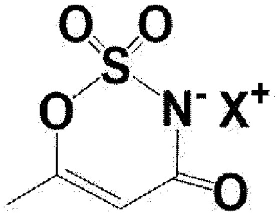

(I)

$$Li_aNi_{(1-b-c)}Co_bMn_cO_2 \qquad (II)$$

EP 4 310 951 A1

## Description

### Technical Field

The present disclosure relates to: a nonaqueous secondary battery; and a method of producing a nonaqueous secondary battery.

### Background Art

Nonaqueous secondary batteries have been attracting attention as batteries having a high energy density.

Patent Document 1 discloses a nonaqueous electrolyte secondary battery (hereinafter, referred to as "nonaqueous secondary battery"). The nonaqueous secondary battery disclosed in Patent Document 1 includes a positive electrode, a negative electrode, and a nonaqueous electrolyte solution. The negative electrode is formed of lithium or a negative electrode material capable of occluding and releasing lithium. The nonaqueous electrolyte solution is composed of an organic solvent and a solute. The organic solvent contains at least one of lithium monofluorophosphate or lithium difluorophosphate.

Patent Document 2 discloses a lithium ion battery (hereinafter, referred to as "nonaqueous secondary battery"). The nonaqueous secondary battery concretely disclosed in Patent Document 2 includes a positive electrode, a negative electrode, and a nonaqueous electrolyte solution. The positive electrode contains a positive electrode active material containing $LiNi_{0.5}Co_{0.3}Mn_{0.2}O_2$. The negative electrode contains a negative electrode active material containing graphite. The nonaqueous electrolyte solution contains acesulfame Li. A content of acesulfame Li is 1% by mass, 7% by mass, or 14% by mass, with respect to a total amount of the nonaqueous electrolyte solution.

Patent Document 1: Japanese Patent No. 3439085
Patent Document 2: Chinese Patent Application Publication No. 111333595

## SUMMARY OF THE INVENTION

### Technical Problem

In such a nonaqueous electrolyte secondary battery as disclosed in Patent Document 1, however, there is a risk that not only the direct-current resistance is likely to increase but also the discharge capacity is likely to decrease when the battery is stored in a high-temperature environment (e.g., at 60°C) over an extended period (e.g., 14 days) in a fully-charged state.

The present inventors conducted reproduction experiments of the nonaqueous secondary battery concretely disclosed in Patent Document 2. As a result, it was experimentally confirmed that, when the content of acesulfame Li is adjusted to be 1% by mass or more with respect to a total amount of a nonaqueous electrolyte solution, acesulfame Li does not dissolve in the nonaqueous electrolyte solution, leaving an insoluble component in the nonaqueous electrolyte solution. It was therefore experimentally confirmed that the nonaqueous electrolyte solution concretely disclosed in Patent Document 2 cannot be used as a nonaqueous electrolyte solution of a nonaqueous secondary battery from the standpoints of, for example, surely inhibiting a short circuit between a positive electrode and a negative electrode, and sufficiently impregnating the nonaqueous electrolyte solution into the entirety of the positive electrode and the negative electrode.

In view of the above-described circumstances, an object of the disclosure is to provide: a nonaqueous secondary battery in which an increase in the direct-current resistance and a decrease in the discharge capacity are inhibited even when an acesulfame compound is dissolved in a nonaqueous electrolyte solution and the battery is stored in a high-temperature environment over an extended period in a fully-charged state; and a method of producing a nonaqueous secondary battery. The acesulfame compound contains acesulfame Li, acesulfame Na, acesulfame K, or acesulfame H.

### Solution to Problem

Means for solving the above-described problem include the following aspects.

<1> A nonaqueous secondary battery, including:

a nonaqueous electrolyte solution that contains a compound (A) represented by the following Formula (I);
a positive electrode that contains a positive electrode active material containing a compound (B) represented by the following Formula (II); and

a negative electrode,
wherein a content of the compound (A) is more than 0% by mass but less than 1.0% by mass with respect to a total amount of the nonaqueous electrolyte solution:

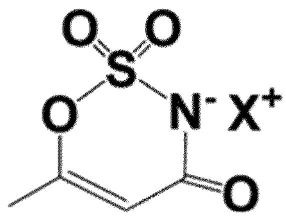

(I)

wherein, in Formula (I), $X^+$ represents a hydrogen ion, a lithium ion, a sodium ion, or a potassium ion:

$$Li_aNi_{(1-b-c)}Co_bMn_cO_2 \qquad (II)$$

wherein, in Formula (II), $0.1 \leq a < 1.3$, $0.1 < (1 - b - c) < 1.0$, $0 < b < 0.6$, and $0 < c < 0.6$.

<2> The nonaqueous secondary battery according to <1>, wherein the compound (A) contains a compound in which $X^+$ is a lithium ion.
<3> The nonaqueous secondary battery according to <1>, wherein the compound (A) contains a compound in which $X^+$ is a potassium ion.
<4> The nonaqueous secondary battery according to any one of <1> to <3>, wherein the nonaqueous electrolyte solution contains a nonaqueous solvent that contains ethylene carbonate, dimethyl carbonate, and ethyl methyl carbonate.
<5> The nonaqueous secondary battery according to any one of <1> to <4>, wherein the compound (B) contains a compound represented by $LiNi_{0.5}Co_{0.3}Mn_{0.2}O_2$ or a compound represented by $LiNi_{1/3}Co_{1/3}Mn_{1/3}O_2$.
<6> The nonaqueous secondary battery according to any one of <1> to <5>, wherein the nonaqueous electrolyte solution does not contain propylene carbonate.
<7> The nonaqueous secondary battery according to any one of <1> to <6>, wherein:

the nonaqueous electrolyte solution contains a compound (X), and
the compound (X) is at least one selected from the group consisting of:

a compound that is at least one selected from the group consisting of lithium monofluorophosphate and lithium difluorophosphate;
a compound represented by the following Formula (III);
a compound represented by the following Formula (IV); and
a compound represented by the following Formula (V):

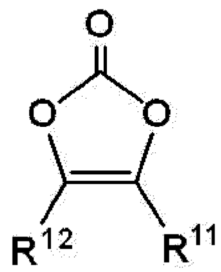

(III)

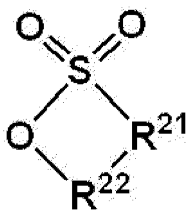

(IV)

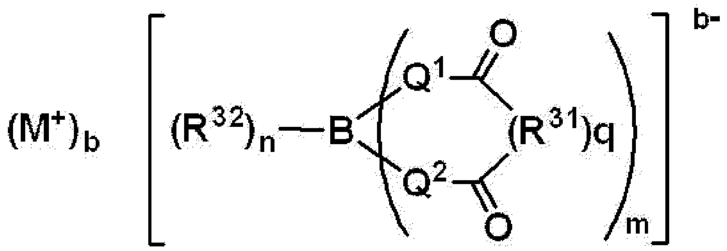

(V)

wherein, in Formula (III), each of $R^{11}$ and $R^{12}$ independently represents a hydrogen atom, a methyl group, an ethyl group, or a propyl group,
wherein, in Formula (IV), $R^{21}$ represents an oxygen atom, an alkylene group having from 1 to 6 carbon atoms, an alkenylene group having from 1 to 6 carbon atoms, or a vinylene group; and $R^{22}$ represents an alkylene group having from 1 to 6 carbon atoms, a group represented by the following Formula (iv-1), or a group represented by the following Formula (iv-2), and
wherein, in Formula (V), M represents an alkali metal, b represents an integer from 1 to 3; m represents an integer from 1 to 4, n represents an integer from 0 to 8, q represents 0 or 1; $R^{31}$ represents an alkylene group having from 1 to 10 carbon atoms, a halogenated alkylene group having from 1 to 10 carbon atoms, an arylene group having from 6 to 20 carbon atoms, or a halogenated arylene group having from 6 to 20 carbon atoms, the halogenated alkylene group, the arylene group and the halogenated arylene group each optionally containing a substituent or a heteroatom in a structure thereof and, when q is 1 and m is from 2 to 4, m instances of $R^{31}$ are optionally bound to each other; $R^{32}$ represents a halogen atom, an alkyl group having from 1 to 10 carbon atoms, a halogenated alkyl group having from 1 to 10 carbon atoms, an aryl group having from 6 to 20 carbon atoms, or a halogenated aryl group having from 6 to 20 carbon atoms, the halogenated alkyl group, the aryl group and the halogenated aryl group each optionally containing a substituent or a heteroatom in a structure thereof and, when n is from 2 to 8, n instances of $R^{32}$ are optionally bound to each other to form a ring; and each of $Q^1$ and $Q^2$ independently represents an oxygen atom or a carbon atom:

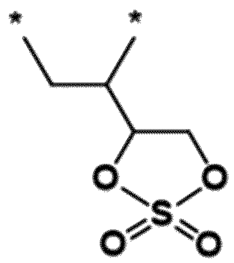

(IV-1)

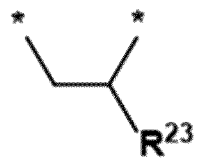

(IV-2)

wherein, in Formula (iv-1) and Formula (iv-2), * represents a binding position, and in Formula (iv-2), $R^{23}$ represents a group typified by an alkyl group having from 1 to 6 carbon atoms.

<8> A method of producing a nonaqueous secondary battery, the method including:

a preparation step of preparing a nonaqueous secondary battery precursor; and
an aging step of charging and discharging the nonaqueous secondary battery precursor,
wherein the nonaqueous secondary battery precursor comprises:

a nonaqueous electrolyte solution that comprises a compound (A) represented by the following Formula (I);
a positive electrode that comprises a positive electrode active material comprising a compound (B) represented by the following Formula (II); and
a negative electrode, and

wherein a content of the compound (A) is more than 0% by mass but less than 1.0% by mass with respect to a total amount of the nonaqueous electrolyte solution:

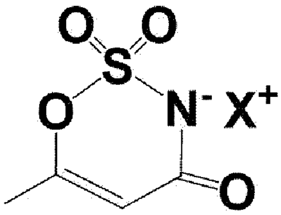

(I)

wherein, in Formula (I), $X^+$ represents a hydrogen ion, a lithium ion, a sodium ion, or a potassium ion:

$$Li_aNi_{1-b-c)}Co_bMn_cO_2 \qquad (II)$$

wherein, in Formula (II), $0.1 \leq a < 1.3$, $0.1 < (1 - b - c) < 1.0$, $0 < b < 0.6$, and $0 < c < 0.6$.

Advantageous Effects of Invention

According to the disclosure, the following are provided: a nonaqueous secondary battery in which an increase in the direct-current resistance and a decrease in the discharge capacity are inhibited even when an acesulfame compound is dissolved in a nonaqueous electrolyte solution and the battery is stored in a high-temperature environment over an extended period in a fully-charged state; and a method of producing a nonaqueous secondary battery.

BRIEF DESCRIPTION OF DRAWINGS

FIG. 1 is a schematic perspective view illustrating a laminate-type battery, which is one example of the nonaqueous secondary battery of the disclosure.

FIG. 2 is a schematic cross-sectional view taken along the thickness direction of a layered electrode assembly housed in the laminate-type battery illustrated in FIG. 1.

FIG. 3 is a schematic cross-sectional view illustrating a coin-type battery, which is another example of the nonaqueous secondary battery of the disclosure.

DESCRIPTION OF EMBODIMENTS

In the present specification, those numerical ranges that are expressed with "to" each denote a range that includes the numerical values stated before and after "to" as the lower limit value and the upper limit value, respectively.

In the present specification, when there are plural substances that correspond to a component of a composition, an indicated amount of the component in the composition means, unless otherwise specified, a total amount of the plural substances existing in the composition.

[Nonaqueous Secondary Battery]

The nonaqueous secondary battery of the disclosure includes: a nonaqueous electrolyte solution that contains a compound (A) represented by the following Formula (I); a positive electrode that contains a positive electrode active material containing a compound (B) represented by the following Formula (II); and a negative electrode.

A content of the compound (A) is more than 0% by mass but less than 1.0% by mass with respect to a total amount of the nonaqueous electrolyte solution.

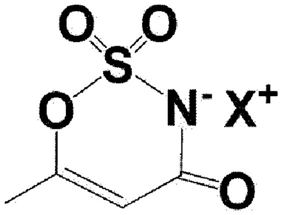

(I)

In Formula (I), $X^+$ represents a hydrogen ion, a lithium ion, a sodium ion, or a potassium ion.

$$Li_aNi_{(1-b-c)}Co_bMn_cO_2 \qquad (II)$$

In Formula (II), $0.1 \leq a < 1.3$, $0.1 < (1 - b - c) < 1.0$, $0 < b < 0.6$, and $0 < c < 0.6$.

The nonaqueous secondary battery of the disclosure has the above-described constitution; therefore, in this battery, even when an acesulfame compound is dissolved in the nonaqueous electrolyte solution and the battery is stored in a high-temperature environment over an extended period in a fully-charged state (hereinafter, this storage is referred to as "high-temperature long-term storage"), an increase in the direct-current resistance and a decrease in the discharge capacity are inhibited as compared to a constitution that does not include the compound (A).

The reason why an increase in the direct-current resistance is inhibited even with high-temperature long-term storage as compared to a constitution that does not include the compound (A) is presumed to be mainly the following.

It is believed that, when the nonaqueous secondary battery of the disclosure is charged or discharged (hereinafter, referred to as "charging/discharging"), a solid electrolyte interphase (SEI) film (hereinafter, referred to as "SEI film") is formed on the surface of the negative electrode and the surface of the positive electrode.

The SEI film of the negative electrode and the SEI film of the positive electrode may each be hereinafter simply referred to as "SEI film".

An SEI film is believed to be formed of mainly lithium ions contained in the nonaqueous electrolyte solution and a decomposition product of the nonaqueous electrolyte solution decomposed by charging/discharging of the nonaqueous secondary battery.

The formation of an SEI film is believed to make a side reaction, which is not a natural battery reaction, unlikely to proceed even in a charge-discharge cycle of the nonaqueous secondary battery. The "battery reaction" refers to a reaction causing lithium ions to move in and out of the positive electrode and the negative electrode (intercalation). Examples of the side reaction include: a reductive decomposition reaction of the electrolyte solution by the negative electrode; an oxidative decomposition reaction of the electrolyte solution by the positive electrode; and elution of a metal element contained in the positive electrode active material.

Meanwhile, the SEI film of the negative electrode is likely to be thickened every time charging/discharging is performed. The lithium ions contained in the nonaqueous electrolyte solution are consumed by the thickening of the SEI film of the negative electrode.

Therefore, the thickening of the SEI film of the negative electrode is considered as a factor that causes an increase in the direct-current resistance of the nonaqueous secondary battery. Particularly, the thickening of the SEI film of the negative electrode becomes prominent when the nonaqueous secondary battery is exposed to a high-temperature environment. In addition, in the event of elution of at least one of Mn ions, Ni ions, or Co ions (hereinafter, referred to as "Mn ions and the like"), which are metal components of the positive electrode, into the nonaqueous electrolyte solution, the Mn ions and the like are deposited on the surface of the negative electrode, facilitating the decomposition reaction of the nonaqueous electrolyte solution. Therefore, elution of Mn ions and the like from the positive electrode is also considered as a factor that causes an increase in the direct-current resistance of the nonaqueous secondary battery. Particularly, elution of Mn ions and the like from the positive electrode becomes prominent when the nonaqueous secondary battery is exposed to a high-temperature environment. Accordingly, in order to inhibit the elution of a metal of the positive electrode, an additive (compound (A)) to be coordinated to the metal of the positive electrode is added to the nonaqueous electrolyte solution, whereby the elution of the metal of the positive electrode can be inhibited. The additive (compound (A)) that can be coordinated to the metal of the positive electrode is coordinated to the metal of the positive electrode and can thereby stabilize the metal on the surface of the positive electrode active material.

The reason why the direct-current resistance of the nonaqueous secondary battery of the disclosure is unlikely to increase even with high-temperature long-term storage is presumed to be because the compound (A) inhibits the thickening of the SEI film of the negative electrode as well as the elution of Mn ions and the like from the positive electrode.

Moreover, the reason why the discharge capacity is less likely to decrease even with high-temperature long-term storage as compared to a constitution that does not include the compound (A) is presumed to be because, as described above, the compound (A) inhibits the thickening of the SEI film of the negative electrode as well as the elution of Mn ions and the like from the positive electrode and, therefore, the progress of a side reaction is inhibited and a decrease in the discharge capacity is made unlikely to occur even when the nonaqueous secondary battery is exposed to a high-temperature environment.

(Nonaqueous Electrolyte Solution)

The nonaqueous secondary battery of the disclosure includes a nonaqueous electrolyte solution.

The nonaqueous electrolyte solution of the disclosure contains a compound (A).

The nonaqueous electrolyte solution may contain the compound (A) singly, or in combination of two or more kinds thereof.

<Compound (A)>

The compound (A) is represented by the following Formula (I):

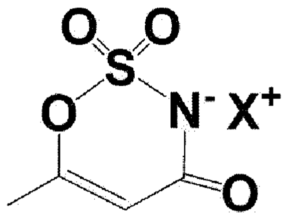

(I)

In Formula (I), $X^+$ represents a hydrogen ion, a lithium ion, a sodium ion, or a potassium ion.

Hereinafter, the compound (A) in which $X^+$ is a hydrogen ion is referred to as "acesulfame acid"; the compound (A) in which $X^+$ is a lithium ion is referred to as "acesulfame Li"; the compound (A) in which $X^+$ is a sodium ion is referred to as "acesulfame Na"; and the compound (A) in which $X^+$ is potassium is referred to as "acesulfame K".

Particularly, $X^+$ is preferably a lithium ion or a potassium ion, more preferably a lithium ion. In other words, the compound (A) is preferably acesulfame Li or acesulfame K, more preferably acesulfame Li.

When the compound (A) is acesulfame K, even with high-temperature long-term storage of the nonaqueous secondary battery, an increase in the direct-current resistance and a decrease in the discharge capacity of the nonaqueous secondary battery can be inhibited as compared to a constitution that does not include the compound (A). This is presumed to be mainly because an addition of acesulfame K to the nonaqueous electrolyte solution inhibits the elution of a metal of the positive electrode even with high-temperature long-term storage of the nonaqueous secondary battery.

When the compound (A) is acesulfame Li, even with high-temperature long-term storage of the nonaqueous secondary battery, an increase in the direct-current resistance and a decrease in the discharge capacity of the nonaqueous secondary battery can be further inhibited as compared to a constitution in which the compound (A) is acesulfame K.

The content of the compound (A) is more than 0% by mass but less than 1.0% by mass, preferably from 0.05% by mass to 0.8% by mass, more preferably from 0.1% by mass to 0.6% by mass, still more preferably from 0.2% by mass to 0.5% by mass, particularly preferably from 0.3% by mass to 0.5% by mass, with respect to a total amount of the nonaqueous electrolyte solution.

As long as the content of the compound (A) is in this range, the compound (A) is completely dissolved in the nonaqueous electrolyte solution. Therefore, injection of the nonaqueous electrolyte solution can be easily performed at the time of assembling the nonaqueous secondary battery. As long as the content of the compound (A) is in the above-described range, an increase in the direct-current resistance and a decrease in the discharge capacity of the nonaqueous secondary battery can be inhibited even when the nonaqueous secondary battery is stored in a high-temperature environment over an extended period in a fully-charged state.

<Nonaqueous Solvent>

The nonaqueous electrolyte solution of the disclosure may contain a nonaqueous solvent.

The nonaqueous solvent can be selected as appropriate from various known solvents.

As the nonaqueous solvent, for example, any of the nonaqueous solvents described in the paragraphs [0069] to [0087] of Japanese Patent Application Laid-Open (JP-A) No. 2017-45723 can be used.

The nonaqueous solvent preferably contains a cyclic carbonate compound and a chain carbonate compound.

The cyclic carbonate compound and the chain carbonate compound may each may be contained singly, or in combination of two or more kinds thereof.

Examples of the cyclic carbonate compound include ethylene carbonate (hereinafter, may be referred to as "EC"), propylene carbonate, 1,2-butylene carbonate, 2,3-butylene carbonate, 1,2-pentylene carbonate, and 2,3-pentylene carbonate.

Thereamong, the cyclic carbonate compound preferably contains ethylene carbonate having a high dielectric constant. Particularly, when a negative electrode active material of the nonaqueous secondary battery contains graphite, the nonaqueous solvent more preferably contains ethylene carbonate.

The nonaqueous electrolyte solution of the disclosure preferably does not contain propylene carbonate.

When the negative electrode active material of the nonaqueous secondary battery contains graphite, by not incorporating propylene carbonate into the nonaqueous solvent, intercalation of lithium ions and propylene carbonate that is a solvent into the graphite negative electrode can be prevented. As a result, not only a peeling of the graphite negative electrode but also a decrease in the discharge capacity and an increase in the direct-current resistance of the nonaqueous secondary battery can be inhibited.

Examples of the chain carbonate compound include dimethyl carbonate (hereinafter, may be referred to as "DMC"), ethyl methyl carbonate (hereinafter, may be referred to as "EMC"), diethyl carbonate, methyl propyl carbonate, methyl isopropyl carbonate, ethyl propyl carbonate, dipropyl carbonate, methyl butyl carbonate, ethyl butyl carbonate, dibutyl carbonate, methyl pentyl carbonate, ethyl pentyl carbonate, dipentyl carbonate, methyl heptyl carbonate, ethyl heptyl carbonate, diheptyl carbonate, methyl hexyl carbonate, ethyl hexyl carbonate, dihexyl carbonate, methyl octyl carbonate, ethyl octyl carbonate, and dioctyl carbonate.

A combination of the cyclic carbonate and the chain carbonate is not particularly limited. The nonaqueous electrolyte solution contains EC, DMC, and EMC as the nonaqueous solvent.

When the negative electrode active material of the nonaqueous secondary battery contains graphite, by incorporating EC into the nonaqueous solvent, a negative electrode SEI film in which lithium ions can smoothly and efficiently move can be formed. Since EC is solid at normal temperature, it is highly viscous even when melted. By mixing EC with low-viscosity DMC and EMC, the nonaqueous solvent is allowed to have an appropriate viscosity. This is believed to make lithium ions in the nonaqueous electrolyte solution likely to move at high speed. As a result, the battery performance of the nonaqueous secondary battery is improved.

A mixing ratio of the cyclic carbonate compound and the chain carbonate compound (cyclic carbonate compound:chain carbonate compound) is, in terms of mass ratio, for example, from 5:95 to 80:20, preferably from 10:90 to 70:30, more preferably from 15:85 to 55:45. By controlling the mixing ratio in this range, an increase in the viscosity of the nonaqueous electrolyte solution can be inhibited, and the dissociation degree of the below-described electrolyte can be increased. Thus, the conductivity of the nonaqueous electrolyte solution, which relates to the charge-discharge characteristics of the nonaqueous secondary battery, can be improved. In addition, the solubility of the electrolyte can be further increased. Therefore, the nonaqueous electrolyte solution is allowed to exhibit excellent electrical conductivity at normal temperature or low temperature, so that the load characteristics of the nonaqueous secondary battery in a low temperature to normal temperature range can be improved.

The nonaqueous solvent may also contain other compound in addition to the cyclic carbonate compound and the chain carbonate compound.

In this case, the nonaqueous solvent may contain only a single kind of other compound, or two or more kinds of other compounds.

Examples of the other compound include cyclic carboxylic acid ester compounds (e.g., $\gamma$-butyrolactone), cyclic sulfone compounds, cyclic ether compounds, chain carboxylic acid ester compounds, chain ether compounds, chain phosphoric acid ester compounds, amide compounds, chain carbamate compounds, cyclic amide compounds, cyclic urea compounds, boron compounds, and polyethylene glycol derivatives.

With regard to these compounds, reference can be made as appropriate to the paragraphs [0069] to [0087] of JP-A No. 2017-45723.

A ratio of the cyclic carbonate compound and the chain carbonate compound in the nonaqueous solvent is preferably 80% by mass or higher, more preferably 90% by mass or higher, still more preferably 95% by mass or higher.

The ratio of the cyclic carbonate compound and the chain carbonate compound in the nonaqueous solvent may be 100% by mass.

When the nonaqueous solvent contains EC, DMC, and EMC, a mixing ratio of EC, DMC, and EMC is not particularly limited, and it is preferably 30:35:35 in terms of volume ratio.

A ratio of the nonaqueous solvent in the nonaqueous electrolyte solution varies depending on the content of other components (e.g., electrolyte and additives); however, it is preferably from 60% by mass to 99% by mass, more preferably from 70% by mass to 97% by mass, still more preferably from 70% by mass to 90% by mass.

<Electrolyte>

The nonaqueous electrolyte solution of the disclosure preferably contains an electrolyte.

The electrolyte preferably contains a lithium salt.

The lithium salt preferably contains $LiPF_6$.

When the electrolyte contains $LiPF_6$, a ratio of $LiPF_6$ in the electrolyte is preferably from 10% by mass to 100% by mass, more preferably from 50% by mass to 100% by mass, still more preferably from 70% by mass to 100% by mass.

The concentration of the electrolyte in the nonaqueous electrolyte solution of the disclosure is preferably from 0.1 mol/L to 3 mol/L, more preferably from 0.5 mol/L to 2 mol/L.

The concentration of $LiPF_6$ in the nonaqueous electrolyte solution of the disclosure is preferably from 0.1 mol/L to 3 mol/L, more preferably from 0.5 mol/L to 2 mol/L.

When the electrolyte contains $LiPF_6$, the electrolyte may also contain a compound other than $LiPF_6$.

Examples of the compound other than $LiPF_6$ include alkyl ammonium salts and lithium salts (i.e. lithium salts other than $LiPF_6$).

Examples of the alkyl ammonium salts include $(C_2H_5)_4NPF_6$, $(C_2H_5)_4NBF_4$, $(C_2H_5)_4NClO_4$, $(C_2H_5)_4NAsF_6$,

$(C_2H_5)_4N_2SiF_6$, $(C_2H_5)_4NOSO_2C_kF_{(2k+1)}$ (k = an integer from 1 to 8), and $(C_2H_5)_4NPF_n[C_kF_{(2k+1)}]_{(6-n)}$ (n = 1 to 5, k = an integer from 1 to 8).

Examples of the lithium salts (i.e. lithium salts other than $LiPF_6$) include $LiBF_4$, $LiClO_4$, $LiAsF_6$, $Li_2SiF_6$, $LiOSO_2C_kF_{(2k+1)}$ (k = an integer from 1 to 8), $LiPF_n[C_kF_{(2k+1)}]_{(6-n)}$ (n = 1 to 5, k = an integer from 1 to 8), $LiC(SO_2R^7)(SO_2R^8)(SO_2R^9)$, $LiN(SO_2OR^{10})(SO_2OR^{11})$, and $LiN(SO_2R^{12})(SO_2R^{13})$ (wherein, $R^7$ to $R^{13}$ are optionally the same or different from each other, and each represent a fluorine atom or a perfluoroalkyl group having from 1 to 8 carbon atoms).

<Additives>

The nonaqueous electrolyte solution of the disclosure may also contain an additive. By this, the progress of a side reaction can be inhibited in a charge-discharge cycle of the nonaqueous secondary battery. As a result, the battery performance of the nonaqueous secondary battery is improved.

The nonaqueous electrolyte solution may contain only a single kind of additive, or two or more kinds of additives.

The additive preferably contains a compound (X). In other words, the nonaqueous electrolyte solution of the disclosure preferably contains the compound (X). By this, as compared to a constitution that does not include the compound (X), the nonaqueous electrolyte solution can inhibit an increase in the direct-current resistance of the nonaqueous secondary battery even with high-temperature long-term storage.

The compound (X) is preferably at least one selected from the group consisting of:

a compound that is at least one selected from the group consisting of lithium monofluorophosphate and lithium difluorophosphate (this compound is hereinafter referred to as "lithium fluorophosphate compound");
a compound represented by the following Formula (III) (hereinafter, referred to as "cyclic carbonic acid ester compound (III)");
a compound represented by the following Formula (IV) (hereinafter, referred to as "cyclic sulfur-containing ester compound (IV)"); and
a compound represented by the following Formula (V) (hereinafter, referred to as "cyclic dicarbonyl compound (V)").

The details of each of the cyclic carbonic acid ester compound (III), the cyclic sulfur-containing ester compound (IV), and the cyclic dicarbonyl compound (V) will be described below.

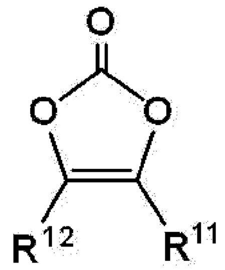

(III)

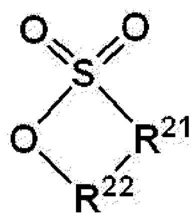

(IV)

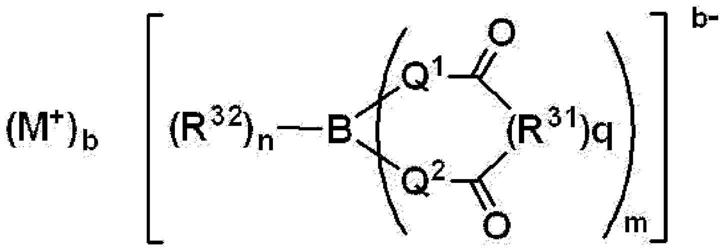

(V)

The nonaqueous electrolyte solution may contain the compound (X) singly, or in combination of two or more kinds thereof. The greater the variety of the compound (X) contained in the nonaqueous electrolyte solution, the further the nonaqueous electrolyte solution tends to be able to inhibit not only an increase in the direct-current resistance but also a decrease in the discharge capacity even with high-temperature long-term storage of the nonaqueous secondary battery.

(Lithium Fluorophosphate Compound)

The additive preferably contains a lithium fluorophosphate compound.

The nonaqueous electrolyte solution, by containing a lithium fluorophosphate compound in addition to the compound (A), can further inhibit an increase in the direct-current resistance of the nonaqueous secondary battery even with high-temperature long-term storage as compared to a constitution that does not include the compound (X).

The lithium fluorophosphate compound is one or both of lithium monofluorophosphate and lithium difluorophosphate.

When the nonaqueous electrolyte solution contains a lithium fluorophosphate compound, a content of the lithium fluorophosphate compound is preferably from 0.001% by mass to 10% by mass, more preferably from 0.003% by mass to 5.0% by mass, still more preferably from 0.03% by mass to 3.0% by mass, particularly preferably from 0.1% by mass to 2.0% by mass, further preferably from 0.3% by mass to 2.0% by mass, with respect to a total amount of the nonaqueous electrolyte solution.

When the additive contains a lithium fluorophosphate compound, the additive preferably further contains at least one selected from the group consisting of a cyclic carbonic acid ester compound (III), a cyclic sulfur-containing ester compound (IV), and a cyclic dicarbonyl compound (V). By this, even with high-temperature long-term storage of the nonaqueous secondary battery, the nonaqueous electrolyte solution can further inhibit not only an increase in the direct-current resistance, but also a decrease in the discharge capacity.

(Cyclic Carbonic Acid Ester Compound (III))

The additive preferably contains a cyclic carbonic acid ester compound (III).

The nonaqueous electrolyte solution, by containing a cyclic carbonic acid ester compound (III) in addition to the compound (A), can further inhibit an increase in the direct-current resistance of the nonaqueous secondary battery even with high-temperature long-term storage as compared to a constitution that does not include the compound (X).

It is presumed that this effect is exerted because of the following.

After high-temperature long-term storage, the cyclic carbonic acid ester compound (III) is likely to be reductively decomposed by the negative electrode and form an SEI film before the nonaqueous electrolyte solution is reductively decomposed on the negative electrode. By this, decomposition of the nonaqueous electrolyte solution on the negative electrode is inhibited. As a result, an increase in the direct-current resistance of the nonaqueous secondary battery can be further inhibited even with high-temperature long-term storage of the nonaqueous secondary battery.

The cyclic carbonic acid ester compound (III) is represented by the following Formula (III).

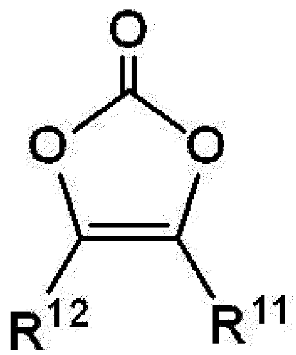

(III)

In Formula (III), each of $R^{11}$ and $R^{12}$ independently represents a hydrogen atom, a methyl group, an ethyl group, or a propyl group.

Specific examples of the cyclic carbonic acid ester compound (III) include compounds represented by the following Formulae (III-1) to (III-7).

The compound represented by Formula (III-1) may be hereinafter referred to as "vinylene carbonate (III-1)".

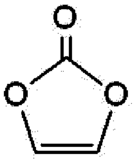

(III-1)

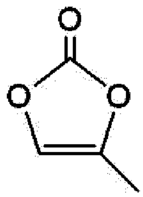

(III-2)

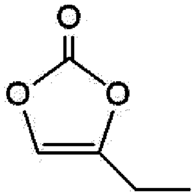

(III-3)

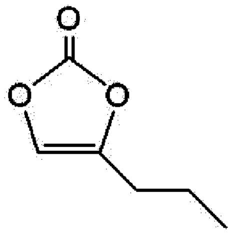

(III-4)

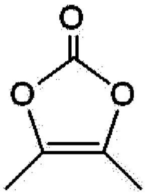

(III-5)

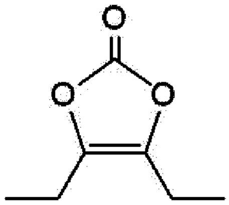

(III-6)

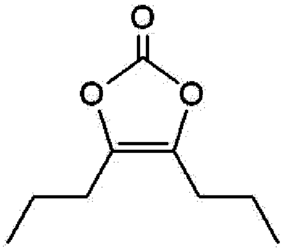

(III-7)

When the nonaqueous electrolyte solution contains a cyclic carbonic acid ester (III), a content of the cyclic carbonic acid ester (III) is preferably from 0.10% by mass to 10.0% by mass, more preferably from 0.20% by mass to 5.0% by mass, still more preferably from 0.30% by mass to 3.0% by mass, particularly preferably from 0.30% by mass to 2.0% by mass, with respect to a total amount of the nonaqueous electrolyte solution. As long as the content of the cyclic carbonic acid ester (III) is in this range, an increase in the thickness of the SEI film can be inhibited while inhibiting the decomposition of the nonaqueous solvent on the positive electrode or the negative electrode. As a result, an increase in the direct-current resistance of the nonaqueous secondary battery is further inhibited even with high-temperature long-term storage. As long as the content of the cyclic carbonic acid ester (III) is in the above-described range, the SEI film is formed at a thickness that enables to inhibit the decomposition of the nonaqueous solvent contained in the nonaqueous electrolyte solution. As a result, an increase in the direct-current resistance of the nonaqueous secondary battery is further inhibited even with high-temperature long-term storage.

(Cyclic Sulfur-Containing Ester Compound (IV))

The additive may also contain a cyclic sulfur-containing ester compound (IV).

The nonaqueous electrolyte solution, by containing a cyclic sulfur-containing ester compound (IV) in addition to the compound (A), can further inhibit an increase in the direct-current resistance of the nonaqueous secondary battery even with high-temperature long-term storage as compared to a constitution that does not include the compound (X).

It is presumed that this effect is exerted because of the following.

After high-temperature long-term storage, the cyclic sulfur-containing ester compound (IV) is likely to be oxidatively decomposed by the negative electrode and form an SEI film before the nonaqueous electrolyte solution is reductively decomposed on the negative electrode. By this, decomposition of the nonaqueous electrolyte solution on the positive electrode is inhibited. As a result, an increase in the direct-current resistance of the nonaqueous secondary battery can be further inhibited even with high-temperature long-term storage of the nonaqueous secondary battery.

The cyclic sulfur-containing ester compound (IV) is a compound represented by the following Formula (IV).

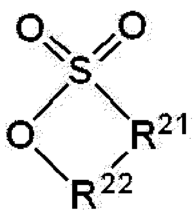

(IV)

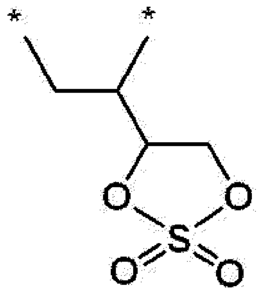

(iv-1)

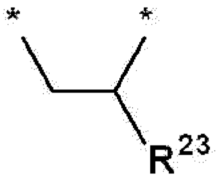

(iv-2)

In Formula (IV), $R^{21}$ represents an oxygen atom, an alkylene group having from 1 to 6 carbon atoms, an alkenylene group having from 1 to 6 carbon atoms, or a vinylene group; $R^{22}$ represents an alkylene group having from 1 to 6 carbon atoms, a group represented by the above-described Formula (iv-1), or a group represented by the above-described Formula (iv-2); and * represents a binding position. In Formula (iv-2), $R^{23}$ represents a group typified by an alkyl group having from 1 to 6 carbon atoms.

In Formula (IV), $R^{21}$ is preferably an alkylene group having from 1 to 3 carbon atoms, a vinylene group, or an oxygen atom, more preferably a trimethylene group, a vinylene group, or an oxygen atom.

In Formula (IV), $R^{22}$ is preferably a group represented by the above-described Formula (iv-1).

Specific examples of the cyclic sulfur-containing ester compound (IV) include compounds represented by the following Formulae (IV-1) to (IV-7). Hereinafter, the compound represented by Formula (IV-1) may be referred to as "cyclic sulfur-containing ester compound (IV-1)", the compound represented by Formula (IV-2) may be referred to as "1,3-propene sultone (IV-2)", and the compound represented by Formula (IV-3) may be referred to as "4-propyl-1,3,2-dioxathiolane-2,2-dioxide (IV-3)".

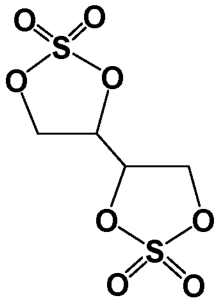

( IV-1 )

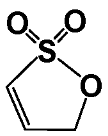

( IV-2 )

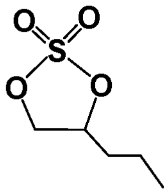

( IV-3 )

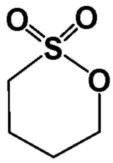

( IV-4 )

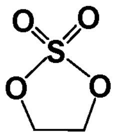

( IV-5 )

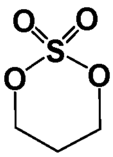

( IV-6 )

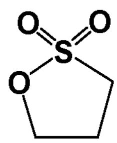

( IV-7 )

The nonaqueous electrolyte solution may contain the cyclic sulfur-containing ester compound (IV) singly, or in combination of two or more kinds thereof. When the nonaqueous electrolyte solution contains two or more kinds of the cyclic sulfur-containing ester compound (IV), even with high-temperature long-term storage of the nonaqueous secondary battery, not only an increase in the direct-current resistance but also a decrease in the discharge capacity tends to be inhibited as compared to a case where the nonaqueous electrolyte solution contains a single kind of the cyclic sulfur-containing ester compound (IV).

When the nonaqueous electrolyte solution contains a cyclic sulfur-containing ester compound (IV), a content of the cyclic sulfur-containing ester compound (IV) is preferably from 0.01% by mass to 5.0% by mass, more preferably from 0.05% by mass to 3.0% by mass, still more preferably from 0.10% by mass to 2.0% by mass, particularly preferably from 0.20% by mass to 2.0% by mass, with respect to a total amount of the nonaqueous electrolyte solution. As long as the content of the cyclic sulfur-containing ester compound (IV) is in this range, the nonaqueous secondary battery can be operated without deterioration of the lithium ion conductivity caused by an SEI film. In addition, with the SEI film containing a sulfite or sulfate structure, the battery characteristics of the nonaqueous secondary battery are improved. As long as the content of the cyclic sulfur-containing ester compound (IV) is in the above-described range, the SEI film contains a sufficient amount of a sulfite or sulfate structure. This makes a thermally and chemically stable inorganic salt or macromolecular structure more likely to be formed. Therefore, in a high-temperature environment, for example, elution of a component of the SEI film and modification of the SEI film, which impair the durability of the SEI film, are unlikely to occur. As a result, the durability of the SEI film, as well as the battery characteristics of the nonaqueous secondary battery are improved.

(Cyclic Dicarbonyl Compound (V))

The additive may also contain a cyclic dicarbonyl compound (V).

The nonaqueous electrolyte solution, by containing a cyclic dicarbonyl compound (V) in addition to the compound (A), can further inhibit an increase in the direct-current resistance of the nonaqueous secondary battery after high-temperature long-term storage, as compared to a constitution that does not include the compound (X).

It is presumed that this effect is exerted because of the following.

When the nonaqueous electrolyte solution contains a cyclic dicarbonyl compound (V) in addition to the compound (A), an SEI film can contain therein bonds derived from the cyclic dicarbonyl compound (V) in addition to the above-described reaction product and the like. This makes a thermally and chemically stable inorganic salt or macromolecular structure more likely to be formed. Therefore, in a high-temperature environment, for example, elution of a component of the SEI film and modification of the SEI film, which impair the durability of the SEI film, are unlikely to occur. As a result, a decrease in the discharge capacity and an increase in the direct-current resistance of the nonaqueous secondary battery are further inhibited even in a charge-discharge cycle performed after long-term storage of the nonaqueous secondary battery in a high-temperature environment.

The cyclic dicarbonyl compound (V) is a compound represented by Formula (V).

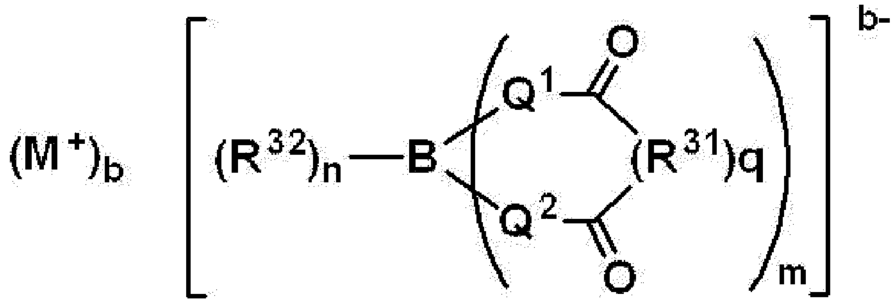

(V)

In Formula (V), M represents an alkali metal; b represents an integer from 1 to 3; m represents an integer from 1 to 4; n represents an integer from 0 to 8; and q represents 0 or 1. $R^{31}$ represents an alkylene group having from 1 to 10 carbon atoms, a halogenated alkylene group having from 1 to 10 carbon atoms, an arylene group having from 6 to 20 carbon atoms, or a halogenated arylene group having from 6 to 20 carbon atoms, the halogenated alkylene group, the arylene group and the halogenated arylene group each optionally containing a substituent or a heteroatom in a structure thereof and, when q is 1 and m is from 2 to 4, m instances of $R^{31}$ are optionally bound to each other. $R^{32}$ represents a halogen atom, an alkyl group having from 1 to 10 carbon atoms, a halogenated alkyl group having from 1 to 10 carbon atoms, an aryl group having from 6 to 20 carbon atoms, or a halogenated aryl group having from 6 to 20 carbon atoms, the halogenated alkyl group, the aryl group and the halogenated aryl group each optionally containing a substituent or a heteroatom in a structure thereof and, when n is from 2 to 8, n instances of $R^{32}$ are optionally bound to each other to form a ring. Each of $Q^1$ and $Q^2$ independently represents an oxygen atom or a carbon atom.

In Formula (V), examples of the alkali metal represented by M include lithium, sodium, and potassium. Thereamong, M is preferably lithium.

The symbol b represents the valence of an anion or the number of cations, which is an integer from 1 to 3. When b is larger than 3, a salt of an anionic compound tends to be hardly soluble in a mixed organic solvent. The symbol b is preferably 1.

The constants m and n are each a value relating to the number of ligands, and can be adjusted as appropriate in accordance with the type of M. The symbol n is preferably an integer from 0 to 4.

The constant q is 0 or 1. When q is 0, the chelate ring is a five-membered ring, while when q is 1, the chelate ring is a six-membered ring.

In Formula (V), $R^{31}$ represents an alkylene group having from 1 to 10 carbon atoms, a halogenated alkylene group having from 1 to 10 carbon atoms, an arylene group having from 6 to 20 carbon atoms, or a halogenated arylene group having from 6 to 20 carbon atoms. These alkylene group, halogenated alkylene group, arylene group, and halogenated arylene group may each contain a substituent or a heteroatom in their structures. Specifically, $R^{31}$ may contain a substituent in place of a hydrogen atom of any of these groups. Examples of the substituent include a halogen atom, a linear or cyclic alkyl group, an aryl group, an alkenyl group, an alkoxy group, an aryloxy group, a sulfonyl group, an amino group, a cyano group, a carbonyl group, an acyl group, an amide group, and a hydroxy group. $R^{31}$ may have a structure in which a nitrogen atom, a sulfur atom, or an oxygen atom is introduced in place of a carbon atom of any of these groups. When q is 1 and m is from 2 to 4, m $R^{31}$s may be bound to each other. Examples of such a case include ligands such as ethylenediaminetetraacetic acid.

In Formula (V), $R^{32}$ represents a halogen atom, an alkyl group having from 1 to 10 carbon atoms, a halogenated alkyl group having from 1 to 10 carbon atoms, an aryl group having from 6 to 20 carbon atoms, or a halogenated aryl group having from 6 to 20 carbon atoms. These alkyl group, halogenated alkyl group, aryl group, and halogenated aryl group of $R^{32}$, similarly to the case of $R^{31}$, may each contain a substituent or a heteroatom in their structures and, when n is from 2 to 8, n $R^{32}$s may be bound to each other to form a ring. $R^{32}$ is preferably an electron-withdrawing group, particularly preferably a fluorine atom.

Each of $Q_1$ and $Q_2$ independently represents O or S. In other words, a ligand is bonded to Y via these heteroatoms.

Specific examples of the cyclic dicarbonyl compound (V) include compounds represented by the following Formulae (V-1) and (V-2).

The compound represented by Formula (V-1) may be hereinafter referred to as "lithium bis(oxalato)borate (V-1)".

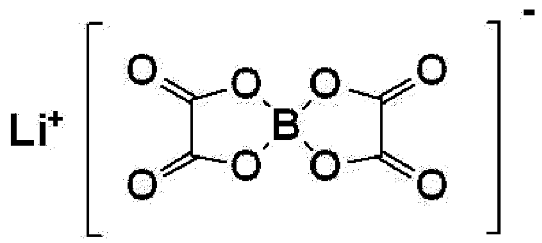

(V-1)

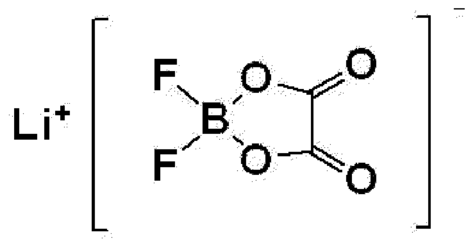

(V-2)

When the nonaqueous electrolyte solution contains a cyclic dicarbonyl compound (V), a content of the cyclic dicarbonyl compound (V) is preferably from 0.01% by mass to 10% by mass, more preferably from 0.05% by mass to 5.0% by mass, still more preferably from 0.10% by mass to 3.0% by mass, particularly preferably from 0.10% by mass to 2.0% by mass, with respect to a total amount of the nonaqueous electrolyte solution. As long as the content of the cyclic dicarbonyl compound (V) is in this range, the nonaqueous secondary battery can be operated without deterioration of the lithium cation conductivity caused by an SEI film. In addition, with the SEI film containing a boric acid structure, the battery characteristics of the nonaqueous secondary battery are improved. As long as the content of the cyclic dicarbonyl compound (V) is in the above-described range, the SEI film contains a sufficient amount of a structure mainly composed of boric acid. This makes a thermally and chemically stable inorganic salt or macromolecular structure more likely to be formed. Therefore, in a high-temperature environment, for example, elution of a component of the SEI film and modification of the SEI film, which impair the durability of the SEI film, are unlikely to occur. As a result, the durability of the SEI film is improved. In addition, an increase in the direct-current resistance of the nonaqueous secondary battery can be further inhibited even with high-temperature long-term storage.

When the additive contains the cyclic dicarbonyl compound (V), the additive preferably further contains at least one cyclic sulfur-containing ester compound (IV), more preferably further contains two cyclic sulfur-containing ester compounds (IV). By this, even with high-temperature long-term storage of the nonaqueous secondary battery, the nonaqueous electrolyte solution can further inhibit not only an increase in the direct-current resistance, but also a decrease in the discharge capacity.

(Positive Electrode)

The nonaqueous secondary battery of the disclosure includes a positive electrode.

The positive electrode contains a positive electrode active material containing a compound (B) represented by the following Formula (II). By incorporating the compound (B) into the positive electrode, an increase in the direct-current resistance of the nonaqueous secondary battery can be inhibited and the discharge capacity of the nonaqueous secondary battery can be increased as compared to a constitution in which the positive electrode active material of the positive electrode is lithium cobaltate ($LiCoO_2$).

$$Li_aNi_{(1-b-c)}Co_bMn_cO_2 \qquad (II)$$

In Formula (II), $0.1 \leq a < 1.30$, $0.1 < (1 - b - c) < 1.0$, $0 < b < 0.6$, and $0 < c < 0.6$.

The compound (B) is selected as appropriate in accordance with the intended use of the nonaqueous secondary battery.

The value of a is 0.1 or more but less than 1.3, preferably from 0.5 to 1.2, more preferably from 0.8 to 1.1, still more preferably from 0.9 to 1.1.

The value of (1- b- c) is more than 0.1 but less than 1.0, preferably from 0.2 to 0.9, more preferably from 0.3 to 0.8, still more preferably from 0.3 to 0.7.

The value of b is more than 0 but less than 0.6, preferably from 0.1 to 0.5, more preferably from 0.2 to 0.4.

The value of c is more than 0 but less than 0.6, preferably from 0.1 to 0.5, more preferably from 0.2 to 0.4.

Specific examples of the compound (B) include

$Li_{1.2}Ni_{0.15}Co_{0.1}Mn_{0.55}O_2$ (NCM115),
$LiNi_{1/3}Co_{1/3}Mn_{1/3}O_2$ (NCM333),
$LiNi_{0.4}Co_{0.2}Mn_{0.4}O_2$ (NCM424),
$LiNi_{0.4}Co_{0.3}Mn_{0.3}O_2$ (NCM433),
$LiNi_{0.5}Co_{0.2}Mn_{0.3}O_2$ (NCM523),
$LiNi_{0.50}Co_{0.25}Mn_{0.25}O_2$ (NCM502525),
$LiNi_{0.5}Co_{0.3}Mn_{0.2}O_2$ (NCM532),
$LiNi_{0.6}Co_{0.2}Mn_{0.2}O_2$ (NCM622),
$LiNi_{0.7}Co_{0.15}Mn_{0.15}O_2$ (NCM701515),
$LiNi_{0.8}Co_{0.1}Mn_{0.1}O_2$ (NCM811),
$LiNi_{0.9}Co_{0.5}Mn_{0.5}O_2$ (NCM900505), and
$LiNi_{0.95}Co_{0.25}Mn_{0.25}O_2$ (NCM952.52.5).

The positive electrode may contain the compound (B) singly, or in combination of two or more kinds thereof.

Particularly, the compound (B) preferably contains NCM333, NCM424, NCM433, NCM523, NCM502525, NCM532, NCM622, NCM701515, or NCM811, more preferably contains NCM333, NCM532, NCM622, or NCM811, still more preferably contains NCM523 or NCM333.

The positive electrode may also contain other positive electrode active material different from the compound (B).

Examples of the other positive electrode active material include: transition metal oxides; transition metal sulfides; composite oxides composed of lithium and a transition metal; and electroconductive polymer materials.

Examples of the transition metal oxides or the transition metal sulfides include $MoS_2$, $TiS_2$, $MnO_2$, and $V_2O_5$.

Examples of the composite oxides composed of lithium and a transition metal include $LiCoO_2$, $LiMnO_2$, $LiMn_2O_4$, $LiNiO_2$, $LiNi_XCo_{(1-X)}O_2$ [$0 < X < 1$], $Li_{1+\alpha}Me_{1-\alpha}O_2$ having an $\alpha$-$NaFeO_2$-type crystal structure (Me represents a transition metal element such as Mn, Ni, or Co, $1.0 \leq (1 + \alpha)/(1 - \alpha) \leq 1.6$), $LiFePO_4$, and $LiMnPO_4$.

Examples of the electroconductive polymer materials include polyaniline, polythiophene, polypyrrole, polyacetylene, polyacene, dimercaptothiadiazole, and polyaniline complexes.

These other positive electrode active materials may be used singly, or in combination of two or more kinds thereof as a mixture.

When the conductivity of the positive electrode active material is not sufficient, the positive electrode active material may be used together with a conductive aid to construct the positive electrode. Examples of the conductive aid include carbon materials, such as carbon black, amorphous whisker, and graphite.

The positive electrode may include a positive electrode current collector.

A material of the positive electrode current collector is not particularly limited, and any known material can be used as desired.

Specific examples of the positive electrode current collector include metal materials, such as aluminum, aluminum alloys, stainless steel, nickel, titanium, and tantalum; carbon materials, such as a carbon cloth and a carbon paper.

The positive electrode may also include the positive electrode current collector, and a positive electrode active material layer that is arranged on at least a portion of the surface of the negative electrode current collector.

The positive electrode active material layer contains at least one positive electrode active material. The positive electrode active material in the positive electrode active material layer preferably contains an composite oxide composed of lithium and a transition metal.

A content of the composite oxide is preferably from 70% by mass to 100% by mass, more preferably from 80% by mass to 100% by mass, with respect to a total amount of the positive electrode active material layer.

The positive electrode active material layer may further contain at least one of the above-described conductive aids.

The positive electrode active material layer may further contain at least one binder as well.

Examples of the binder include polyvinyl acetate, polymethyl methacrylate, nitrocellulose, fluorine resins, and rubber particles. Examples of the fluorine resins include polytetrafluoroethylenes (PTFE), polyvinylidene fluorides (PVDF), tetrafluoroethylene-hexafluoropropylene copolymers (FEP), and vinylidene fluoride-hexafluoropropylene copolymers. Examples of the rubber particles include styrene-butadiene rubber particles and acrylonitrile rubber particles.

Thereamong, from the standpoint of improving the oxidation resistance of the positive electrode active material layer, the binder is preferably a fluorine resin.

A content of the binder is preferably from 1% by mass to 20% by mass, more preferably from 1% by mass to 10% by mass, with respect to a total amount of the positive electrode active material layer.

(Negative Electrode)

The nonaqueous secondary battery of the disclosure includes a negative electrode.

The negative electrode may include a negative electrode active material and a negative electrode current collector.

As the negative electrode active material, at least one selected from the group consisting of metal lithium, lithium-containing alloys, metals and alloys that can be alloyed with lithium, oxides capable of doping and dedoping lithium ions, transition metal nitrides capable of doping and dedoping lithium ions, and carbon materials capable of doping and dedoping lithium ions (these materials may be used singly, or in combination of two or more kinds thereof as a mixture) can be used.

Examples of the metals and alloys that can be alloyed with lithium (or lithium ions) include silicon, silicon alloys, tin, and tin alloys. The negative electrode active material may be lithium titanate as well.

Thereamong, from the standpoint of further improving the formability of a negative electrode SEI film and thereby further reducing the direct-current resistance of the nonaqueous secondary battery in an early stage and/or after high-temperature long-term storage, the negative electrode active material is preferably a carbon material capable of doping and dedoping lithium ions. Examples of such a carbon material include carbon black, activated charcoal, graphite materials (artificial graphite and natural graphite), and amorphous carbon materials. The form of the carbon material may be any of a fibrous form, a spherical form, a potato form, and a flake form.

Specific examples of the amorphous carbon materials include hard carbon, cokes, mesocarbon microbeads (MCMB) calcined at 1,500°C or lower, and mesophase pitch carbon fibers (MCF).

Examples of the graphite materials include natural graphite and artificial graphite. As artificial graphite, for example, graphitized MCMB and graphitized MCF can be used. As a graphite material, a boron-containing graphite material can be used. As a graphite material, one coated with a metal such as gold, platinum, silver, copper, or tin, one coated with amorphous carbon, or a mixture of amorphous carbon and graphite can be used as well.

These carbon materials may be used singly, or in combination of two or more kinds thereof as a mixture. The carbon material is particularly preferably a carbon material whose interplanar spacing d(002) of the (002) plane, which is measured by an X-ray analysis, is 0.340 nm or smaller. As the carbon material, a graphite having a true density of 1.70 g/$cm^3$ or higher, or a highly crystalline carbon material having a property comparable thereto is also preferred. By using such a carbon material as described above, the energy density of the nonaqueous secondary battery can be further increased.

A material of the negative electrode current collector contained in the negative electrode is not particularly limited, and any known material may be used as desired.

Specific examples of the negative electrode current collector include metal materials, such as copper, nickel, stainless steel, and nickel-plated steel. Thereamong, from the standpoint of workability, the negative electrode current collector particularly preferably contains copper.

The negative electrode may include a negative electrode current collector and a negative electrode active material layer that is arranged on at least a portion of the surface of the negative electrode current collector.

The negative electrode active material layer contains at least one negative electrode active material. The negative electrode active material in the negative electrode active material layer preferably contains the above-described carbon material.

From the standpoint of further improving the formability of a negative electrode SEI film and thereby further reducing the direct-current resistance of the nonaqueous secondary battery in an early stage and/or after high-temperature long-term storage, a content of the carbon material is preferably from 70% by mass to 100% by mass, more preferably from 80% by mass to 100% by mass, still more preferably from 90% by mass to 100% by mass, with respect to a total amount of the negative electrode active material layer.

The negative electrode active material layer may further contain at least one binder as well.

The binder is preferably at least one selected from the group consisting of styrene-butadiene (SBR) rubbers (e.g., SBR latex), acrylonitrile-butadiene rubbers, acrylonitrile-butadiene-styrene rubbers, carboxymethylcellulose (CMC), hydroxypropylmethylcellulose, polyvinyl alcohols, hydroxypropylcellulose, and diacetylcellulose. The binder preferably contains an SBR latex and carboxymethylcellulose.

A content of the binder in the negative electrode active material layer is preferably from 1% by mass to 20% by mass, more preferably from 1% by mass to 10% by mass, still more preferably from 1% by mass to 5% by mass, with respect to a total amount of the negative electrode active material layer.

A content of Si is preferably 5% by mass or less with respect to a total amount of the negative electrode.
When the content of Si is 5% by mass or less, the formability of a negative electrode SEI film is further improved, and the direct-current resistance of the nonaqueous secondary battery in an early stage and/or after high-temperature long-term storage is further reduced.

(Separator)

The nonaqueous secondary battery of the disclosure may include a separator. The separator is arranged between the negative electrode and the positive electrode.
The separator is a film that electrically insulates the positive electrode and the negative electrode from each other and allows lithium ions to pass therethrough, examples of which include a porous film and a polymer electrolyte. As the porous film, a microporous polymer film is suitably used, and examples of the material thereof include polyolefins, polyimides, polyvinylidene fluorides, and polyesters.
Particularly, the material of the porous film preferably contains a porous polyolefin, and specific examples of the porous film include porous polyethylene films, porous polypropylene films, and multilayer films containing a porous polyethylene film(s) and a porous polypropylene film(s). The porous polyolefin film may be coated with other resin having excellent thermal stability.
Examples of the polymer electrolyte include polymers in which a lithium salt is dissolved, and polymers swollen with an electrolyte solution.
The nonaqueous electrolyte solution of the disclosure may also be used for the purpose of swelling a polymer to obtain the polymer electrolyte.

[Constitution of Nonaqueous Secondary Battery]

The nonaqueous secondary battery of the disclosure can be formed in a variety of known shapes, such as a cylindrical shape, a coin shape, a rectangular shape, a laminate shape, a film shape, and other arbitrary shape. However, the nonaqueous secondary battery has the same basic structure regardless of its shape, and modifications in design can be made in accordance with the intended purpose.
One example of the nonaqueous secondary battery of the disclosure is a laminate-type battery.
FIG. 1 is a schematic perspective view illustrating a laminate-type battery, which is one example of the nonaqueous secondary battery of the disclosure, and FIG. 2 is a schematic cross-sectional view taken along the thickness direction of a layered electrode assembly housed in the laminate-type battery illustrated in FIG. 1.
A laminate-type battery 1 includes a laminate outer package 8. The nonaqueous electrolyte solution of the disclosure (not illustrated in FIG. 1) and a layered electrode assembly (not illustrated in FIG. 1) are housed inside the laminate outer package 8. The periphery of the laminate outer package 8 is sealed. In other words, the inside of the laminate outer package 8 is hermetically sealed. As a material of the laminate outer package 8, for example, aluminum is used.
In the layered electrode assembly, as illustrated in FIG. 2, positive electrode plates 5 and negative electrode plates 6 are alternately disposed in layers via separators 7. The positive electrode plates 5, the negative electrode plates 6, and the separators 7 are impregnated with the nonaqueous electrolyte solution of the disclosure.
The plural positive electrode plates 5 in the layered electrode assembly are all electrically connected to a positive electrode terminal 2 via a positive electrode tab (not illustrated), and the positive electrode terminal 2 partially protrudes outward from a peripheral end portion of the laminate outer package 8 (see FIG. 1). The protruding part of the positive electrode terminal 2 on the peripheral end portion of the laminate outer package 8 is sealed with an insulating seal 4.
In the same manner, the plural negative electrode plates 6 in the layered electrode assembly are all electrically connected to a negative electrode terminal 3 via a negative electrode tab (not illustrated), and the negative electrode terminal 3 partially protrudes outward from a peripheral end portion of the laminate outer package 8 (see FIG. 1). The protruding part of the negative electrode terminal 3 on the peripheral end portion of the laminate outer package 8 is sealed with the insulating seal 4.
In the above-described laminate-type battery according to one example, the number of the positive electrode plates 5 is five, the number of the negative electrode plates 6 is six, and the positive electrode plates 5 and the negative electrode plates 6 are disposed in layers via the separator 7 such that the negative electrode plates 6 are arranged as outermost layers on both sides. In the laminate-type battery, however, the number of the positive electrode plates, the number of the negative electrode plates, and the arrangement of these electrode plates are not limited to the above-described one example, and it is needless to say that various modifications may be made.
Another example of the nonaqueous secondary battery of the disclosure is a coin-type battery.
FIG. 3 is a schematic perspective view illustrating a coin-type battery, which is another example of the nonaqueous secondary battery of the disclosure.

In the coin-type battery illustrated in FIG. 3, a disc-shaped negative electrode 12, a separator 15 into which a nonaqueous electrolyte solution is injected, a disc-shaped positive electrode 11 and, as required, spacer plates 17 and 18 made of stainless steel, aluminum, or the like are disposed in layers in the order mentioned and housed between a positive electrode can 13 (hereinafter, also referred to as "battery can") and a sealing plate 14 (hereinafter, also referred to as "battery can lid"). The positive electrode can 13 and the sealing plate 14 are hermetically sealed by caulking via a gasket 16.

In this example, the nonaqueous electrolyte solution of the disclosure is used as the nonaqueous electrolyte solution injected into the separator 15.

The use of the nonaqueous secondary battery of the disclosure is not particularly limited, and the nonaqueous secondary battery can be used in a variety of known applications. For example, the nonaqueous secondary battery can be widely utilized in small portable devices as well as large devices, such as electric-powered vehicles, laptop computers, portable computers, mobile phones, headphone stereos, video cameras, liquid crystal television sets, handy cleaners, electronic organizers, calculators, radios, back-up power supplies, motors, lighting equipment, gaming machines, timepieces, electric tools, and cameras.

Examples of the electric-powered vehicles include electric-powered four-wheel vehicles and electric-powered two-wheel vehicles. The electric-powered four-wheel vehicles include electric vehicles (EVs), plug-in hybrid electric vehicles (PHEVs), and hybrid vehicles (HVs). The electric-powered two-wheel vehicles include electric motorcycles and electric assist bicycles.

[Method of Producing Nonaqueous Secondary Battery]

The method of producing a nonaqueous secondary battery according to the disclosure includes a below-described preparation step and a below-described aging step. By this, a nonaqueous secondary battery is obtained.

(Preparation Step)

In the preparation step, a nonaqueous secondary battery precursor is prepared.

The nonaqueous secondary battery precursor includes: a nonaqueous electrolyte solution containing the above-described compound (A) represented by Formula (I); a positive electrode containing the above-described compound (B) represented by Formula (II); and a negative electrode.

A content of the compound (A) is more than 0% by mass but less than 1.0% by mass with respect to a total amount of the nonaqueous electrolyte solution.

The constitution of the nonaqueous secondary battery precursor is the same as that of the nonaqueous secondary battery, except that an SEI film is not formed. Therefore, description of the constitution of the nonaqueous secondary battery precursor is omitted.

A method of preparing the nonaqueous secondary battery precursor is not particularly limited, and the nonaqueous secondary battery precursor may be assembled by any known method.

(Aging Step)

In the aging step, the nonaqueous secondary battery precursor is subjected to charging or discharging (hereinafter, referred to as "aging treatment"). By this, an SEI film is formed. In other words, a nonaqueous secondary battery is obtained.

The aging treatment includes charging and discharging the nonaqueous secondary battery precursor in an environment of from 25°C to 70°C. Particularly, the aging treatment includes: a first charging phase; a first retention phase; a second charging phase; a second retention phase; and a charge-discharge phase.

In the first charging phase, the nonaqueous secondary battery precursor is charged in an environment of from 25°C to 70°C. In the first retention phase, the nonaqueous secondary battery precursor after the first charging phase is maintained in an environment of from 25°C to 70°C. In the second charging phase, the nonaqueous secondary battery precursor after the first retention phase is charged in an environment of from 25°C to 70°C. In the second retention phase, the nonaqueous secondary battery precursor after the second charging phase is maintained in an environment of from 25°C to 70°C. In the charge-discharge phase, the nonaqueous secondary battery precursor after the second retention phase is subjected to a combination of charging and discharging at least once in an environment of from 25°C to 70°C.

In the nonaqueous secondary battery obtained by the method of producing a nonaqueous secondary battery according to the disclosure, even with high-temperature long-term storage, an effect that an increase in the direct-current resistance and a decrease in the discharge capacity are inhibited is more effectively exerted as compared to a constitution

that does not include the compound (A).

EXAMPLES

Embodiments of the disclosure will now be described in detail referring to Examples. It is noted here, however, that the disclosure is not limited to the below-described Examples by any means.

[Example 1-1]

A nonaqueous secondary battery precursor was produced in the following manner.

<Preparation of Nonaqueous Electrolyte Solution>

Ethylene carbonate (EC), dimethyl carbonate (DMC), and ethyl methyl carbonate (EMC) were mixed at a ratio EC: DMC: EMC of 30:35:35 (volume ratio). By this, a mixed solvent was obtained as a nonaqueous solvent.

In the thus obtained mixed solvent, $LiPF_6$ as an electrolyte was dissolved such that the concentration thereof in a nonaqueous electrolyte solution to be eventually obtained would be 1 mol/L, whereby an electrolyte solution was obtained. The thus obtained electrolyte solution is hereinafter referred to as "basic electrolyte solution".

As a compound (A), acesulfame Li represented by the following Formula (I-1) was used.

Acesulfame Li was added to the basic electrolyte solution such that the content (% by mass) thereof with respect to a total amount of a nonaqueous electrolyte solution to be eventually obtained would be as shown in Table 1. By this, a nonaqueous electrolyte solution was obtained.

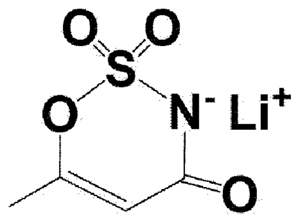

(I-1)

<Production of Positive Electrode>

A mixture was obtained by adding $LiNi_{0.5}Co_{0.2}Mn_{0.3}O_2$ (94% by mass) as a positive electrode active material, carbon black (3% by mass) as a conductive aid, and polyvinylidene fluoride (PVdF) (3% by mass) as a binder. The thus obtained mixture was dispersed in an N-methylpyrrolidone solvent to obtain a positive electrode mixture slurry.

As a positive electrode current collector, a 20 μm-thick aluminum foil was prepared.

The above-obtained positive electrode mixture slurry was applied and dried onto the aluminum foil, and the resultant was subsequently roll-pressed using a press machine to obtain a sheet-form positive electrode. The thus obtained positive electrode consisted of the positive electrode current collector and a positive electrode active material layer.

<Production of Negative Electrode>

A negative electrode mixture slurry was obtained by mixing 96% by mass of natural graphite as a negative electrode active material, 1% by mass of carbon black as a conductive aid, sodium carboxymethyl cellulose dispersed in pure water as a thickening agent in an amount of 1% by mass in terms of solid content, and a styrene-butadiene rubber (SBR) dispersed in pure water as a binder in an amount of 2% by mass in terms of solid content.

As a negative electrode current collector, a 10 μm-thick copper foil was prepared.

The above-obtained negative electrode mixture slurry was applied and dried onto the copper foil, and the resultant was subsequently roll-pressed using a press machine to obtain a sheet-form negative electrode. The thus obtained negative electrode consisted of the negative electrode current collector and a negative electrode active material layer.

<Preparation of Separator>

As a separator, a porous polyethylene film was prepared.

<Production of Coin-type Battery>

The negative electrode, the positive electrode, and the separator were punched out in disc shapes of 14 mm, 13 mm, and 17 mm in diameter, respectively, whereby a coin-shaped negative electrode, a coin-shaped positive electrode, and a coin-shaped separator were each obtained.

The thus obtained coin-shaped negative electrode, coin-shaped separator, and coin-shaped positive electrode were disposed in layers in the order mentioned inside a stainless-steel battery can (size: 2032). Subsequently, 20 μL of the nonaqueous electrolyte solution was injected into the battery can to impregnate the separator, the positive electrode, and the negative electrode with the nonaqueous electrolyte solution.

Next, an aluminum plate (thickness: 1.2 mm, diameter: 16 mm) and a spring were placed on the positive electrode, and a battery can lid was caulked via a polypropylene gasket to tightly seal the resulting battery.

In this manner, a coin-type nonaqueous secondary battery precursor having the configuration illustrated in FIG. 3 was obtained. This coin-type nonaqueous secondary battery precursor had a size of 20 mm in diameter and 3.2 mm in height.

[Examples 1-2 to 2-4 and Comparative Examples 1-1 to 2-1]

Coin-type nonaqueous secondary battery precursors were obtained in the same manner as in Example 1-1, except that the type of the compound (B), the type and the content of the compound (A), and the type and the content of the below-described compound (X) were changed as shown in Table 1.

The compounds used in Examples 1-2 to 2-4 and Comparative Examples 1-1 to 2-1 are represented by the following formulae. Specifically, acesulfame K is represented by the following Formula (I-2); vinylene carbonate (III-1) is represented by the following Formula (III-1), the cyclic sulfur-containing ester compound (IV-1) is represented by the following Formula (IV-1); 1,3-propene sultone (IV-2) is represented by the following Formula (IV-2); 4-propyl-1,3,2-dioxathiolane-2,2-dioxide (IV-3) is represented by the following Formula (IV-3); and lithium bis(oxalato)borate (V-1) is represented by the following Formula (V-1).

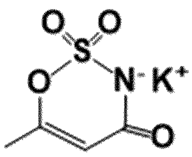
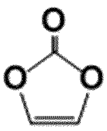
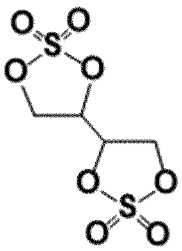
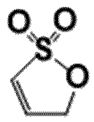
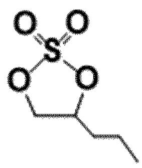
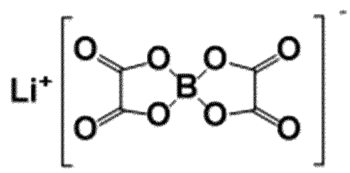

(I-2) (III-1) (IV-1) (IV-2) (IV-3) (V-1)

[Evaluation Tests]

Each of the thus obtained nonaqueous secondary battery precursors was subjected to the below-described aging treatment to obtain a first battery. The below-described initial charge-discharge treatment was performed on the thus obtained first battery to obtain a second battery. The thus obtained second battery was subjected to the below-described treatment for evaluation of direct-current resistance to obtain a third battery, which was subsequently subjected to a high-temperature storage treatment to obtain a fourth battery. The thus obtained fourth battery was subjected to the below-described late charge-discharge treatment to obtain a fifth battery.

Using the thus obtained first to fifth batteries, the resistance increase rate and the capacity retention rate were measured in accordance with the respective measurement methods described below. The measurement results are shown in Table 1.

In addition, in the above-described <Preparation of Nonaqueous Electrolyte Solution>, the injectability was evaluated by the below-described evaluation method. The evaluation results are shown in Table 1.

It is noted here that, in Comparative Examples 1-2 to 1-11, a nonaqueous secondary battery precursor could not be produced in the above-described manner. Therefore, the resistance increase rate and the capacity retention rate were not evaluated in Comparative Examples 1-2 to 1-11.

<Aging Treatment>

Each nonaqueous secondary battery precursor was subjected to the following aging treatment to obtain a first

battery.

The nonaqueous secondary battery precursor was charged to a final voltage range of from 1.5 V to 3.5 V in a temperature range of from 25 to 60°C and then rested for a period ranging from 5 to 50 hours. Subsequently, the nonaqueous secondary battery precursor was charged to a final voltage range of from 3.5 V to 4.2 V in a temperature range of from 25 to 60°C and then maintained for a period ranging from 5 to 50 hours. Thereafter, the nonaqueous secondary battery precursor was charged to 4.2 V in a temperature range of from 25 to 60°C and then discharged to 2.5 V, whereby a first battery was obtained.

<Initial Charge-Discharge Treatment>

The first battery was subjected to the following initial charge-discharge treatment to obtain a second battery.

The first battery was maintained in a temperature environment of 25°C for 12 hours. Subsequently, the first battery was constant-current constant-voltage charged at a charge rate of 0.2 C (0.2C-CCCV) up to 4.2 V (SOC (State of Charge): 100%), rested for 30 minutes, and then constant-current discharged at a discharge rate of 0.2 C (0.2C-CC) to 2.5 V These operations were performed for a total of three cycles to stabilize the battery. Thereafter, this battery was constant-current constant-voltage charged at a charge rate of 0.2 C (0.5C-CCCV) up to 4.2 V, rested for 30 minutes, and then constant-current discharged at a discharge rate of 1 C (1C-CC) to 2.5 V, whereby a second battery was obtained.

<Treatment for Evaluation of Direct-Current Resistance>

The second battery was subjected to the following treatment for evaluation of direct-current resistance to obtain a third battery.

The treatment for evaluation of direct-current resistance was performed in a temperature environment of 25°C. The second battery was subjected to CC discharging to 2.5 V at a discharge rate of 0.2 C and then CCCV charging up to 3.7 V at a charge rate of 0.2 C. The term "CCCV charging" used herein means to perform charging at a constant current and a constant voltage.

Subsequently, the second battery was subjected to CC10s discharging at a discharge rate of 0.2 C and then CC10s charging at a charge rate of 0.2 C. The term "CC10s discharging" used herein means to perform discharging at a constant current for 10 seconds. The term "CC10s charging" used herein means to perform charging at a constant current for 10 seconds.

Next, the second battery was subjected to CC10s discharging at a discharge rate of 0.5 C and subsequent CC25s charging at a charge rate of 0.2 C. Then, the second battery was subjected to CC10s discharging at a discharge rate of 1 C and subsequent CC50s charging at a charge rate of 0.2 C. Thereafter, the second battery was subjected to CC10s discharging at a discharge rate of 2 C and subsequent CC100s charging at a charge rate of 0.2 C, whereby a third battery was obtained.

<High-Temperature Storage Treatment>

The third battery was subjected to the following high-temperature storage treatment to obtain a fourth battery.

The third battery was constant-current charged up to 4.2 V at a charge rate of 0.2 C in a temperature environment of 25°C. Subsequently, this battery in a charged state was left to stand for 14 days in a 60°C atmosphere. By this, a fourth battery was obtained.

<Late Charge-Discharge Treatment>

The fourth battery was subjected to the following late charge-discharge treatment to obtain a fifth battery.

The fourth battery was allowed to dissipate its heat in a temperature environment of 25°C and subjected to first discharging and then first charging, followed by second discharging. The "first discharging" refers to that the fourth battery was constant-current discharged at a discharge rate of 1 C (1C-CC) to 2.5 V The "first charging" refers to that the fourth battery was constant-current constant-voltage charged at a charge rate of 0.2 C (0.2 C-CCCV) up to 4.2 V The "second discharging" refers to that the fourth battery was constant-current discharged at a discharge rate of 1 C (1C-CC) to 2.5 V A fifth battery was obtained as a result.

<Method of Measuring Capacity Retention Rate>

Examples 1-1 to 1-19 and Comparative Example 1-1 are different from Examples 2-1 to 2-4 and Comparative Example 2-1 in terms of the material of the positive electrode active material. Therefore, as described below, the capacity retention rates in Examples 1-1 to 1-9 were determined based on Comparative Example 1-1, while the capacity retention

rates in Examples 2-1 to 2-4 were determined based on Comparative Example 2-1.

(Examples 1-1 to 1-19)

With regard to Examples 1-1 to 1-19, as indicated by the following equation (X1A), a relative value of the discharge capacity of the fourth battery of each Example with respect to the discharge capacity of the fourth battery of Comparative Example 1-1 was defined as "capacity retention rate [%]". The discharge capacity represents the capacity that was obtained when the second discharging was performed in the above-described late charge-discharge treatment.

Capacity retention rate [relative value; %] = (Discharge capacity of fourth battery [mAh/g]/Discharge capacity of fourth battery of Comparative Example 1-1 [mAh/g]) × 100 (X1A)

(Examples 2-1 to 2-4)

With regard to Examples 2-1 to 2-4, as indicated by the following equation (X1B), a relative value of the discharge capacity of the fourth battery of each Example with respect to the discharge capacity of the fourth battery of Comparative Example 2-1 was defined as "capacity retention rate [%]".

Capacity retention rate [relative value; %] = (Discharge capacity of fourth battery [mAh/g]/Discharge capacity of fourth battery of Comparative Example 2-1 [mAh/g]) × 100 (X1B)

<Method of Measuring Resistance Increase Rate>

Examples 1-1 to 1-19 and Comparative Example 1-1 are different from Examples 2-1 to 2-4 and Comparative Example 2-1 in terms of the material of the positive electrode active material. Therefore, as described below, the resistance increase rates in Examples 1-1 to 1-19 were determined based on Comparative Example 1-1, while the resistance increase rates in Examples 2-1 to 2-4 were determined based on Comparative Example 2-1.

(Examples 1-1 to 1-19)

With regard to Examples 1-1 to 1-19, as indicated by the following equation (X2A), a relative value of the rate of increase in resistance of each Example with respect to the rate of increase in resistance of Comparative Example 1-1 was defined as "resistance increase rate [%]".

Resistance increase rate [relative value; %] = (Rate of increase in resistance/Rate of increase in resistance of Comparative Example 1-1) × 100 (X2A)

In the equation (X2A), the rate of increase in resistance is a value obtained by dividing the direct-current resistance (S2) of the fourth battery by the direct-current resistance (S2) of the second battery.
The direct-current resistance (S2) of the fourth battery was measured by the following method.
The fourth battery was subjected to the same treatment for evaluation of direct-current resistance as the one described above. The direct-current resistance (S2) of the fourth battery was determined based on the amount of decrease in voltage due to "CC10s discharging" at each discharge rate of 0.2 C to 1 C (= Voltage before initiation of discharging - Voltage at 10th second after initiation of discharging) and each current value (i.e. the current value corresponding to each discharge rate of 0.2 C to 1 C).
The direct-current resistance (S2) of the second battery was measured in the same manner as the method of measuring the direct-current resistance (S2) of the fourth battery.

(Examples 2-1 to 2-4)

With regard to Examples 2-1 to 2-4, as indicated by the following equation (X2B), a relative value of the rate of increase in resistance of each Example with respect to the rate of increase in resistance of Comparative Example 2-1 was defined as "resistance increase rate [%]".

$$\text{Resistance increase rate [relative value; \%]} = (\text{Rate of increase in resistance/Rate of increase in resistance of Comparative Example 2-1}) \times 100 \quad \text{(X2B)}$$

In the equation (X2B), the rate of increase in resistance is a value obtained by dividing the direct-current resistance (S2) of the fourth battery by the direct-current resistance (S2) of the second battery.

<Evaluation of Injectability>

In the above-described <Preparation of Nonaqueous Electrolyte Solution>, whether or not the compound (A) was dissolved in the basic electrolyte solution was visually observed. Based on the result of this visual observation, the injectability was evaluated in accordance with the following criteria. The evaluation criteria were as follows. The evaluation results are shown in Table 1.

A: The compound (A) was completely dissolved in the basic electrolyte solution.
B: The compound (A) was not completely dissolved in the basic electrolyte solution, and an insoluble component was observed.

[Table 1]

| | Nonaqueous secondary battery | | | | | | | | | | Evaluation results | | |
|---|---|---|---|---|---|---|---|---|---|---|---|---|---|
| | Positive electrode | Negative electrode | Nonaqueous electrolyte solution | | | | | | | | Injectability | Resistance increase rate (%) | Capacity retention rate (%) |
| | Positive electrode active material | Negative electrode active material | Compound (A) | | Compound (X) | | | | | | | | |
| | Compound (B) | Type | Type | Content (% by mass) | Type | Content (% by mass) | Type | Content (% by mass) | Type | Content (% by mass) | | | |
| Example 1-1 | NCM523 | natural graphite | acesulfame Li | 0.5 | - | - | - | - | - | - | A | 78 | 115 |
| Example 1-2 | NCM523 | natural graphite | acesulfame K | 0.5 | - | - | - | - | - | - | A | 86 | 113 |
| Example 1-3 | NCM523 | natural graphite | acesulfame Li | 0.2 | - | - | - | - | - | - | A | 89 | 111 |
| Example 1-4 | NCM523 | natural graphite | acesulfame K | 0.2 | - | - | - | - | - | - | A | 92 | 110 |
| Example 1-5 | NCM523 | natural graphite | acesulfame Li | 0.3 | (III-1) | 0.5 | - | - | - | - | A | 58 | 115 |
| Example 1-6 | NCM523 | natural graphite | acesulfame Li | 0.3 | (V-1) | 0.5 | - | - | - | - | A | 50 | 117 |
| Example 1-7 | NCM523 | natural graphite | acesulfame Li | 0.3 | lithium difluorophosphate | 0.5 | - | - | - | - | A | 36 | 115 |
| Example 1-8 | NCM523 | natural graphite | acesulfame Li | 0.3 | (IV-1) | 0.5 | - | - | - | - | A | 22 | 117 |
| Example 1-9 | NCM523 | natural graphite | acesulfame Li | 0.3 | (IV-2) | 0.5 | - | - | - | - | A | 78 | 117 |
| Example 1-10 | NCM523 | natural graphite | acesulfame Li | 0.5 | lithium difluorophosphate | 0.5 | (IV-1) | 0.5 | - | - | A | 60 | 127 |

(continued)

| | Nonaqueous secondary battery | | | | | | | | | | | Evaluation results | | |
|---|---|---|---|---|---|---|---|---|---|---|---|---|---|---|
| | Positive electrode | Negative electrode | Nonaqueous electrolyte solution | | | | | | | | | Injectability | Resistance increase rate (%) | Capacity retention rate (%) |
| | Positive electrode active material | Negative electrode active material | Compound (A) | | Compound (X) | | | | | | | | | |
| | Compound (B) | Type | Type | Content (% by mass) | Type | Content (% by mass) | Type | Content (% by mass) | Type | Content (% by mass) | | | | |
| Example 1-11 | NCM523 | natural graphite | acesulfame Li | 0.5 | lithium difluorophosphate | 0.5 | (V-1) | 0.3 | - | - | | A | 51 | 124 |
| Example 1-12 | NCM523 | natural graphite | acesulfame Li | 0.5 | lithium difluorophosphate | 0.5 | (V-1) | 0.3 | (IV-1) | 1.0 | | A | 49 | 113 |
| Example 1-13 | NCM523 | natural graphite | acesulfame Li | 0.5 | lithium difluorophosphate | 0.5 | (IV-3) | 0.5 | - | - | | A | 51 | 127 |
| Example 1-14 | NCM523 | natural graphite | acesulfame Li | 0.5 | lithium difluorophosphate | 1.0 | (III-1) | 0.2 | - | - | | A | 49 | 124 |
| Example 1-15 | NCM523 | natural graphite | acesulfame Li | 0.5 | lithium difluorophosphate | 0.5 | (III-1) | 0.2 | (V-1) | 0.3 | | A | 69 | 124 |
| Example 1-16 | NCM523 | natural graphite | acesulfame Li | 0.5 | (V-1) | 0.3 | (IV-1) | 1.0 | - | - | | A | 86 | 121 |
| Example 1-17 | NCM523 | natural graphite | acesulfame Li | 0.5 | (III-1) | 0.2 | (V-1) | 0.3 | (IV-1) | 1.0 | | A | 97 | 123 |
| Example 1-18 | NCM523 | natural graphite | acesulfame Li | 0.5 | (V-1) | 0.3 | (IV-1) | 1.0 | (IV-2) | 0.2 | | A | 74 | 121 |
| Example 1-19 | NCM523 | natural graphite | acesulfame Li | 0.5 | (V-1) | 0.3 | (IV-1) | 1.0 | (IV-3) | 0.5 | | A | 85 | 123 |
| Example 2-1 | NCM333 | natural graphite | acesulfame Li | 0.5 | - | - | - | - | - | - | | A | 55 | 115 |

(continued)

| | Nonaqueous secondary battery | | | | | | | | | | | Evaluation results | | |
|---|---|---|---|---|---|---|---|---|---|---|---|---|---|---|
| | Positive electrode | Negative electrode | Nonaqueous electrolyte solution | | | | | | | | | Injectability | Resistance increase rate (%) | Capacity retention rate (%) |
| | Positive electrode active material | Negative electrode active material | Compound (A) | | Compound (X) | | | | | | | | | |
| | Compound (B) | Type | Type | Content (% by mass) | Type | Content (% by mass) | Type | Content (% by mass) | Type | Content (% by mass) | | | | |
| Example 2-2 | NCM333 | natural graphite | acesulfame K | 0.5 | - | - | - | - | - | - | | A | 61 | 113 |
| Example 2-3 | NCM333 | natural graphite | acesulfame Li | 0.2 | - | - | - | - | - | - | | A | 61 | 111 |
| Example 2-4 | NCM333 | natural graphite | acesulfame K | 0.2 | - | - | - | - | - | - | | A | 67 | 110 |
| Comparative Example 1-1 | NCM523 | natural graphite | - | - | - | - | - | - | - | - | | - | 100 | 100 |
| Comparative Example 2-1 | NCM333 | natural graphite | - | - | - | - | - | - | - | - | | - | 100 | 100 |
| Comparative Example 1-2 | NCM523 | natural graphite | acesulfame Li | 1.0 | - | - | - | - | - | - | | B | - | - |
| Comparative Example 1-3 | NCM523 | natural graphite | acesulfame K | 1.0 | - | - | - | - | - | - | | B | - | - |
| Comparative Example 1-4 | NCM523 | natural graphite | acesulfame Li | 2.5 | - | - | - | - | - | - | | B | - | - |
| Comparative Example 1-5 | NCM523 | natural graphite | acesulfame K | 2.5 | - | - | - | - | - | - | | B | - | - |
| Comparative Example 1-6 | NCM523 | natural graphite | acesulfame Li | 5.0 | - | - | - | - | - | - | | B | - | - |

(continued)

| | Nonaqueous secondary battery | | | | | | | | | | Evaluation results | | |
|---|---|---|---|---|---|---|---|---|---|---|---|---|---|
| | Positive electrode | Negative electrode | Nonaqueous electrolyte solution | | | | | | | | | | |
| | Positive electrode active material | Negative electrode active material | Compound (A) | | Compound (X) | | | | | | Injectability | Resistance increase rate (%) | Capacity retention rate (%) |
| | Compound (B) | Type | Type | Content (% by mass) | Type | Content (% by mass) | Type | Content (% by mass) | Type | Content (% by mass) | | | |
| Comparative Example 1-7 | NCM523 | natural graphite | acesulfame K | 5.0 | - | - | - | - | - | - | B | - | - |
| Comparative Example 1-8 | NCM523 | natural graphite | acesulfame Li | 7.5 | - | - | - | - | - | - | B | - | - |
| Comparative Example 1-9 | NCM523 | natural graphite | acesulfame K | 7.5 | - | - | - | - | - | - | B | - | - |
| Comparative Example 1-10 | NCM523 | natural graphite | acesulfame Li | 10.0 | - | - | - | - | - | - | B | - | - |
| Comparative Example 1-11 | NCM523 | natural graphite | acesulfame K | 10.0 | - | - | - | - | - | - | B | - | - |

In Table 1, "Content of compound (A)" indicates the content [% by mass] of the compound (A) with respect to a total amount of the respective nonaqueous electrolyte solutions eventually obtained. Further, "Content of compound (X)" indicates the content [% by mass] of the compound (X) with respect to a total amount of the respective nonaqueous electrolyte solutions eventually obtained.

In Table 1, under the item "Compound (B), "NCM523" and "NCM333" represent "$LiNi_{0.5}Co_{0.2}Mn_{0.3}O_2$" and "$LiNi_{1/3}Co_{1/3}Mn_{1/3}O_2$", respectively.

In Table 1, under the item "Compound (X), "(III-1)", "(V-1)", "(IV-1)", "(IV-2)", and "(IV-3)" represent "vinylene carbonate (III-1)", "lithium bis(oxalato)borate (V-1)", "cyclic sulfur-containing ester compound (IV-1)", "1,3-propene sultone (IV-2)", and "4-propyl-1,3,2-dioxathiolane-2,2-dioxide (IV-3)", respectively.

In Table 1, "-" under the item "Nonaqueous secondary battery" indicates that the corresponding component was not incorporated, and "-" under the item "Evaluation results" indicates that an evaluation could not be made.

The above-described relative value of the direct-current resistance of the fifth battery subjected to a high-temperature storage test corresponds to the rate (%) of increase in the direct-current resistance caused by storage in a 60°C atmosphere (hereinafter, also simply referred to as "rate of increase in resistance").

The term "rate of increase" used herein is expressed as: "100%" when the resistance neither increases nor decreases; "higher than 100%" when the resistance increases; or "lower than 100%" when the resistance decreases.

The reason that attention was given to the rate of increase in resistance is because, although a low resistance value itself is important in the battery performance, a reduction in the rate of increase in resistance due to deterioration and the like during a storage period is also an extremely important performance.

In Comparative Examples 1-2 to 1-11, acesulfame Li or acesulfame K was added to the basic electrolyte solution such that the content (% by mass) of acesulfame Li with respect to a total amount of the respective nonaqueous electrolyte solutions eventually obtained was 1.0% by mass. Thus, acesulfame Li or acesulfame K was not completely dissolved in the basic electrolyte solution. Therefore, in Comparative Examples 1-2 to 1-11, a nonaqueous secondary battery precursor could not be produced.

On the other hand, the nonaqueous secondary batteries of Examples 1-1 to 1-19 each included a nonaqueous electrolyte solution, a positive electrode, and a negative electrode. The nonaqueous electrolyte solution contained acesulfame Li or acesulfame K. The positive electrode contained a positive electrode active material containing $Li(Ni_{0.5}Co_{0.2}Mn_{0.3}O_2)$ or $Li(Ni_{1/3}Co_{1/3}Mn_{1/3}O_2)$. The content of acesulfame Li was more than 0% by mass but less than 1.0% by mass with respect to a total amount of the nonaqueous electrolyte solution. Therefore, acesulfame Li or acesulfame K was completely dissolved in the basic electrolyte solution. In Examples 1-1 to 1-19, the resistance increase rate was 97% or lower, and the capacity retention rate was 110% or higher. As a result, in the nonaqueous secondary batteries of Examples 1-1 to 1-19, it was found that the acesulfame compound was dissolved in the nonaqueous electrolyte solution, and that an increase in the direct-current resistance and a decrease in the discharge capacity were inhibited even when each nonaqueous secondary battery was stored in a high-temperature environment over an extended period in a fully-charged state.

From a comparison between Example 1-1 and Example 1-3 as well as a comparison between Example 1-2 and Example 1-4, it was found that, in those cases where the content of acesulfame Li or acesulfame K was 0.3% by mass or more with respect to a total amount of the nonaqueous electrolyte solution, an increase in the direct-current resistance and a decrease in the discharge capacity were further inhibited even when each nonaqueous secondary battery was stored in a high-temperature environment over an extended period in a fully-charged state.

From comparison between Examples 1-5 to 1-9 and Examples 1-1 to 1-4, it was found that, in those nonaqueous secondary batteries in which the nonaqueous electrolyte solution contained a compound (X), an increase in the direct-current resistance and a decrease in the discharge capacity tended to be further inhibited even when each nonaqueous secondary battery was stored in a high-temperature environment over an extended period in a fully-charged state.

Particularly, from comparison between Example 1-8 and Examples 1-5 to 1-7 and 1-9, it was found that, in the nonaqueous secondary battery in which the nonaqueous electrolyte solution contained "cyclic sulfur-containing ester compound (IV-1)", an increase in the direct-current resistance was yet further inhibited even when the nonaqueous secondary battery was stored in a high-temperature environment over an extended period in a fully-charged state.

From comparison between Examples 1-10 to 1-19 and Examples 1-1 to 1-9, it was found that, in those nonaqueous secondary batteries in which the nonaqueous electrolyte solution contained two or more kinds of "compound (X)", as compared to the cases where the nonaqueous electrolyte solution did not contain any "compound (X)" or the cases where the nonaqueous electrolyte solution contained a single kind of "compound (X)", not only a decrease in the discharge capacity was further inhibited but also an increase in the direct-current resistance tended to be inhibited even when each nonaqueous secondary battery was stored in a high-temperature environment over an extended period in a fully-charged state.

Among Examples 1-10 to 1-19, in Examples 1-10, 1-11, and 1-13 to 1-15, the nonaqueous electrolyte solutions each contained one selected from lithium difluorophosphate, vinylene carbonate (III-1), cyclic sulfur-containing ester compound (IV-1), 4-propyl-1,3,2-dioxathiolane-2,2-dioxide (IV-3), and lithium bis(oxalato)borate (V-1). Therefore, it was

found that these nonaqueous electrolyte solutions inhibited not only an increase in the direct-current resistance but also a decrease in the discharge capacity in a relatively favorable manner even when each nonaqueous secondary battery was stored in a high-temperature environment over an extended period in a fully-charged state.

Among Examples 1-10 to 1-19, in Examples 1-16 to 1-19, the nonaqueous electrolyte solutions each contained cyclic sulfur-containing ester compound (IV-1) and lithium bis(oxalato)borate (V-1). Therefore, it was found that these nonaqueous electrolyte solutions inhibited a decrease in the discharge capacity in a relatively favorable manner even when each nonaqueous secondary battery was stored in a high-temperature environment over an extended period in a fully-charged state.

Among Examples 1-16 to 1-19, in Example 1-18, the nonaqueous electrolyte solution contained 1,3-propene sultone (IV-2) in addition to cyclic sulfur-containing ester compound (IV-1) and lithium bis(oxalato)borate (V-1). Therefore, it was found that this nonaqueous electrolyte solution further inhibited an increase in the direct-current resistance even when the nonaqueous secondary battery was stored in a high-temperature environment over an extended period in a fully-charged state.

Among Examples 1-10 to 1-19, in Example 1-12, the nonaqueous electrolyte solution contained lithium difluorophosphate, cyclic sulfur-containing ester compound (IV-1), and lithium bis(oxalato)borate (V-1). Therefore, it was found that this nonaqueous electrolyte solution favorably inhibited an increase in the direct-current resistance even when the nonaqueous secondary battery was stored in a high-temperature environment over an extended period in a fully-charged state.

From comparison between Examples 1-18 and 1-19 and Example 1-16, it was found that, in those nonaqueous secondary batteries in which the nonaqueous electrolyte solution contained two or more kinds of "cyclic sulfur-containing ester compound (IV-1)", an increase in the direct-current resistance was yet further inhibited even when each nonaqueous secondary battery was stored in a high-temperature environment over an extended period in a fully-charged state.

In Examples 2-1 and 2-2, the nonaqueous secondary batteries each included a nonaqueous electrolyte solution, a positive electrode, and a negative electrode. The nonaqueous electrolyte solution contained acesulfame Li or acesulfame K. The positive electrode contained $Li(Ni_{1/3}Co_{1/3}Mn_{1/3}O_2)$. The content of acesulfame Li or acesulfame K was more than 0% by mass but less than 1.0% by mass with respect to a total amount of the nonaqueous electrolyte solution. Therefore, acesulfame Li or acesulfame K was completely dissolved in the basic electrolyte solution. In Examples 2-1 and 2-2, the resistance increase rate was 67% or lower, and the capacity retention rate was 110% or higher. As a result, in the nonaqueous secondary batteries of Examples 2-1 and 2-2, it was found that an increase in the direct-current resistance and a decrease in the discharge capacity were inhibited even when each nonaqueous secondary battery was stored in a high-temperature environment over an extended period in a fully-charged state.

From a comparison between Example 2-1 and Example 2-3 as well as a comparison between Example 2-2 and Example 2-4, it was found that, in those cases where the content of acesulfame Li or acesulfame K was 0.3% by mass or more with respect to a total amount of the nonaqueous electrolyte solution, an increase in the direct-current resistance and a decrease in the discharge capacity were further inhibited even when each nonaqueous secondary battery was stored in a high-temperature environment over an extended period in a fully-charged state.

The disclosure of Japanese Patent Application No. 2021-044153 filed on March 17, 2021, is hereby incorporated by reference in its entirety.

All the documents, patent applications, and technical standards that are described in the present specification are hereby incorporated by reference to the same extent as if each individual document, patent application, or technical standard is concretely and individually described to be incorporated by reference.

## Claims

**1.** A nonaqueous secondary battery, comprising:

a nonaqueous electrolyte solution that comprises a compound (A) represented by the following Formula (I);
a positive electrode that comprises a positive electrode active material comprising a compound (B) represented by the following Formula (II); and
a negative electrode,
wherein a content of the compound (A) is more than 0% by mass but less than 1.0% by mass with respect to a total amount of the nonaqueous electrolyte solution:

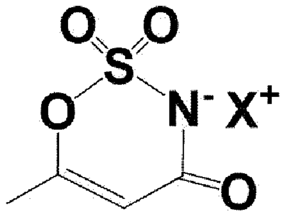

(I)

wherein, in Formula (I), $X^+$ represents a hydrogen ion, a lithium ion, a sodium ion, or a potassium ion:

$$Li_aNi_{(1-b-c)}Co_bMn_cO_2 \qquad (II)$$

wherein, in Formula (II), $0.1 \le a < 1.3$, $0.1 < (1 - b - c) < 1.0$, $0 < b < 0.6$, and $0 < c < 0.6$.

**2.** The nonaqueous secondary battery according to claim 1, wherein the compound (A) comprises a compound in which $X^+$ is a lithium ion.

**3.** The nonaqueous secondary battery according to claim 1, wherein the compound (A) comprises a compound in which $X^+$ is a potassium ion.

**4.** The nonaqueous secondary battery according to any one of claims 1 to 3, wherein the nonaqueous electrolyte solution comprises a nonaqueous solvent that comprises ethylene carbonate, dimethyl carbonate, and ethyl methyl carbonate.

**5.** The nonaqueous secondary battery according to any one of claims 1 to 4, wherein the compound (B) comprises a compound represented by $LiNi_{0.5}Co_{0.2}Mn_{0.3}O_2$ or a compound represented by $LiNi_{1/3}Co_{1/3}Mn_{1/3}O_2$.

**6.** The nonaqueous secondary battery according to any one of claims 1 to 5, wherein the nonaqueous electrolyte solution does not comprise propylene carbonate.

**7.** The nonaqueous secondary battery according to any one of claims 1 to 6, wherein:

the nonaqueous electrolyte solution comprises a compound (X), and
the compound (X) is at least one selected from the group consisting of:

a compound that is at least one selected from the group consisting of lithium monofluorophosphate and lithium difluorophosphate;
a compound represented by the following Formula (III);
a compound represented by the following Formula (IV); and
a compound represented by the following Formula (V):

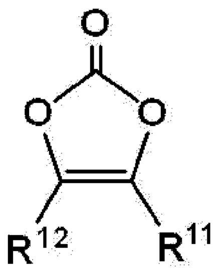

(III)

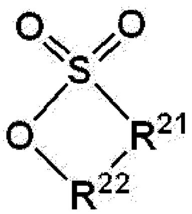

(IV)

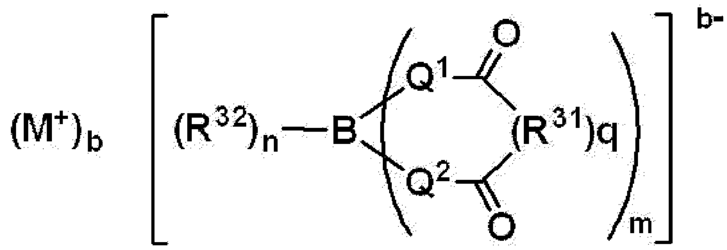

(V)

wherein, in Formula (III), each of $R^{11}$ and $R^{12}$ independently represents a hydrogen atom, a methyl group, an ethyl group, or a propyl group,

wherein, in Formula (IV), $R^{21}$ represents an oxygen atom, an alkylene group having from 1 to 6 carbon atoms, an alkenylene group having from 1 to 6 carbon atoms, or a vinylene group; and $R^{22}$ represents an alkylene group having from 1 to 6 carbon atoms, a group represented by the following Formula (iv-1), or a group represented by the following Formula (iv-2), and

wherein, in Formula (V), M represents an alkali metal, b represents an integer from 1 to 3, m represents an integer from 1 to 4, n represents an integer from 0 to 8, q represents 0 or 1; $R^{31}$ represents an alkylene group having from 1 to 10 carbon atoms, a halogenated alkylene group having from 1 to 10 carbon atoms, an arylene group having from 6 to 20 carbon atoms, or a halogenated arylene group having from 6 to 20 carbon atoms, the halogenated alkylene group, the arylene group and the halogenated arylene group each optionally containing a substituent or a heteroatom in a structure thereof and, when q is 1 and m is from 2 to 4, m instances of $R^{31}$ are optionally bound to each other; $R^{32}$ represents a halogen atom, an alkyl group having from 1 to 10 carbon atoms, a halogenated alkyl group having from 1 to 10 carbon atoms, an aryl group having from 6 to 20 carbon atoms, or a halogenated aryl group having from 6 to 20 carbon atoms, the halogenated alkyl group, the aryl group and the halogenated aryl group each optionally containing a substituent or a heteroatom in a structure thereof and, when n is from 2 to 8, n instances of $R^{32}$ are optionally bound to each other to form a ring; and each of $Q^1$ and $Q^2$ independently represents an oxygen atom or a carbon atom:

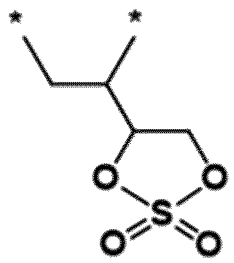

(IV-1)

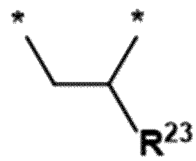

(IV-2)

wherein, in Formula (iv-1) and Formula (iv-2), * represents a binding position, and in Formula (iv-2), $R^{23}$ represents a group typified by an alkyl group having from 1 to 6 carbon atoms.

**8.** A method of producing a nonaqueous secondary battery, the method comprising:

a preparation step of preparing a nonaqueous secondary battery precursor; and
an aging step of charging and discharging the nonaqueous secondary battery precursor,
wherein the nonaqueous secondary battery precursor comprises:

a nonaqueous electrolyte solution that comprises a compound (A) represented by the following Formula (I);
a positive electrode that comprises a positive electrode active material comprising a compound (B) represented by the following Formula (II); and
a negative electrode, and

wherein a content of the compound (A) is more than 0% by mass but less than 1.0% by mass with respect to a total amount of the nonaqueous electrolyte solution:

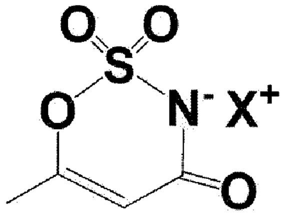

(I)

wherein, in Formula (I), $X^+$ represents a hydrogen ion, a lithium ion, a sodium ion, or a potassium ion:

$$Li_aNi_{(1-b-c)}Co_bMn_cO_2 \qquad (II)$$

wherein, in Formula (II), $0.1 \leq a < 1.3$, $0.1 < (1 - b - c) < 1.0$, $0 < b < 0.6$, and $0 < c < 0.6$.

FIG.1

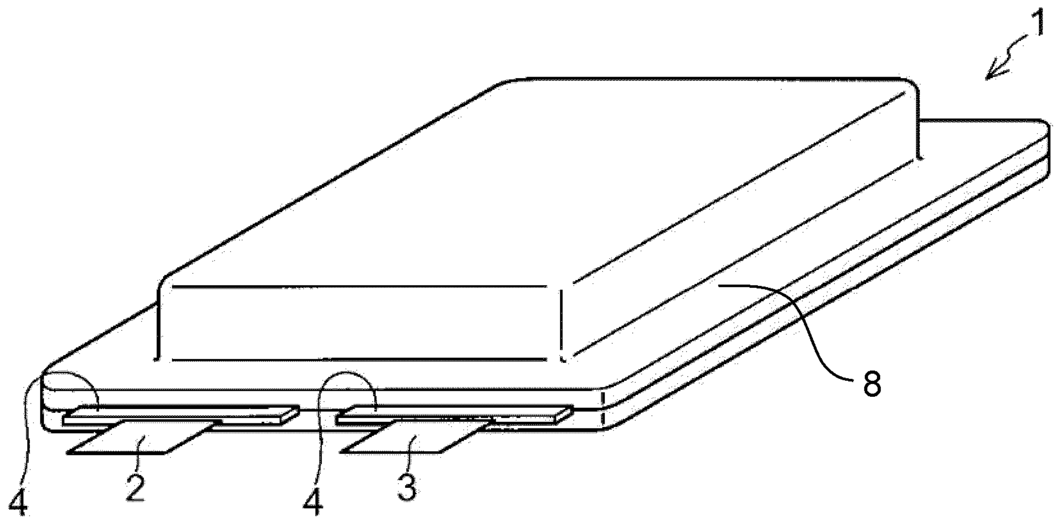


FIG.2

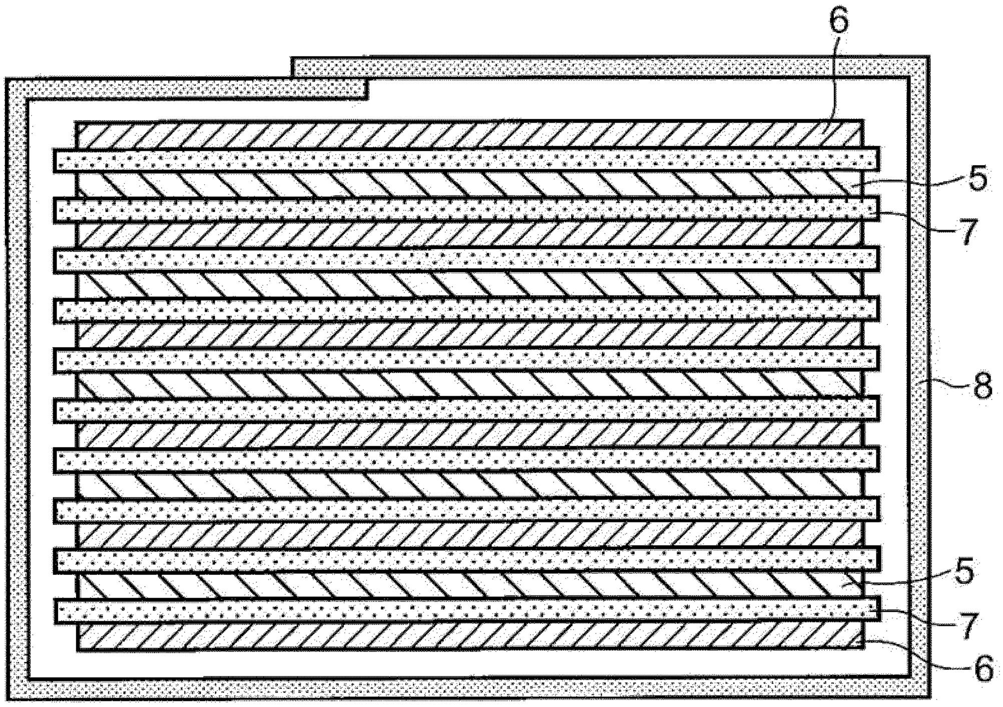

FIG.3

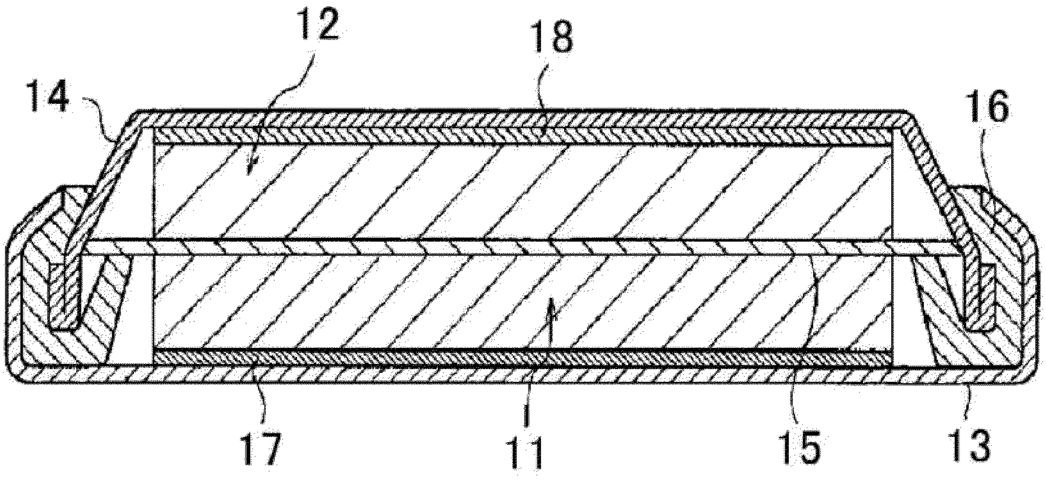

## INTERNATIONAL SEARCH REPORT

International application No. **PCT/JP2022/009159**

**A. CLASSIFICATION OF SUBJECT MATTER**

***H01M 4/505***(2010.01)i; ***H01M 4/525***(2010.01)i; ***H01M 10/052***(2010.01)i; ***H01M 10/0567***(2010.01)i; ***H01M 10/0568***(2010.01)i
FI: H01M10/0567; H01M10/052; H01M4/525; H01M4/505; H01M10/0568

According to International Patent Classification (IPC) or to both national classification and IPC

**B. FIELDS SEARCHED**

Minimum documentation searched (classification system followed by classification symbols)

H01M4/505; H01M4/525; H01M10/052; H01M10/0567; H01M10/0568

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | WO 2017/061064 A1 (SONY CORP) 13 April 2017 (2017-04-13) paragraphs [0028], [0091]-[0095], examples 2-2, 3-7, 3-9, tables 2-3, etc. | 1-3, 8 |
| Y | | 1-8 |
| Y | WO 2014/125946 A1 (SHOWA DENKO K.K.) 21 August 2014 (2014-08-21) example 1 | 1-3, 5, 8 |
| Y | CN 111333595 A (HUIZHOU DADAO NEW MATERIAL TECHNOLOGY CO., LTD.) 26 June 2020 (2020-06-26) example 3 | 4, 6 |
| Y | JP 2015-164126 A (MITSUBISHI CHEM CORP) 10 September 2015 (2015-09-10) example 6 | 7 |
| A | JP 2015-072856 A (ASAHI KASEI CORP) 16 April 2015 (2015-04-16) entire text, all drawings | 1-8 |
| A | JP 2015-092470 A (ASAHI KASEI CORP) 14 May 2015 (2015-05-14) entire text, all drawings | 1-8 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 April 2022** | **17 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/009159**

| Patent document cited in search report | Publication date (day/month/year) | Patent family member(s) | Publication date (day/month/year) |
|---|---|---|---|
| WO 2017/061064 A1 | 13 April 2017 | US 2018/0226675 A1<br>paragraphs [0040], [0102]-[0106], examples 2-2, 3-7, 3-9, tables 2-3, etc.<br>EP 3352282 A1 | |
| WO 2014/125946 A1 | 21 August 2014 | US 2016/0126592 A1<br>example 1<br>EP 2958182 A1 | |
| CN 111333595 A | 26 June 2020 | (Family: none) | |
| JP 2015-164126 A | 10 September 2015 | (Family: none) | |
| JP 2015-072856 A | 16 April 2015 | (Family: none) | |
| JP 2015-092470 A | 14 May 2015 | US 2016/0240888 A1<br>entire text, all drawings<br>EP 3054521 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3439085 B
- CN 111333595
- JP 2017045723 A
- JP 2021044153 A